# EUROPÄISCHE PATENTSCHRIFT

(11) **EP 3 794 663 B1**
(45) Veröffentlichungstag und Bekanntmachung des Hinweises auf die Patenterteilung: **05.01.2022**
(21) Anmeldenummer: 20746660.8
(22) Anmeldetag: 30.07.2020
(51) Int. Cl.: H01M 10/0563, H01M 10/0568, H01M 10/0525, H01M 4/58, H01M 4/587, H01M 4/62, H01M 4/74, H01M 4/80, H01M 10/054, H01M 10/0567

(54) **WIEDERAUFLADBARE BATTERIEZELLE**
RECHARGEABLE BATTERY CELL
CELLULE DE BATTERIE RECHARGEABLE

(30) Priorität: 31.07.2019 EP 19189435
(43) Veröffentlichungstag der Anmeldung: 24.03.2021
(73) Patentinhaber: Innolith Technology AG, 4052 Basel (CH)
(72) Erfinder: ZINCK, Laurent, 67470 Mothern (FR); PSZOLLA, Christian, 76669 Bad Schönborn (DE); BORCK, Markus, 70567 Stuttgart (DE)
(74) Vertreter: Lemcke, Brommer & Partner Patentanwälte Partnerschaft mbB
(86) Internationale Anmeldenummer: PCT/EP2020/071563
(87) Internationale Veröffentlichungsnummer: WO 2021/019041

(56) Entgegenhaltungen:
- JP-A- 2001 143 750
- JP-B2- 4 306 858
- US-A1- 2013 040 188
- T. GAO ET AL: "LiAlCl4.3SO2: a promising inorganic electrolyte for stable Li metal anode at room and low temperature", IONICS, Bd. 25, Nr. 9, 16. Mai 2019 (2019-05-16), Seiten 4137-4147, XP036863915, ISSN: 0947-7047, DOI: 10.1007/S11581-019-02994-7 [gefunden am 2019-05-16]

## Beschreibung

Die Erfindung betrifft eine wiederaufladbare Batteriezelle mit einem auf SO₂-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur besitzen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können.

Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Auch der Elektrolyt ist ein wichtiges Funktionselement jeder wiederaufladbaren Batteriezelle. Er enthält meistens ein Lösungsmittel oder ein Lösungsmittelgemisch und mindestens ein Leitsalz. Feststoffelektrolyte oder ionische Flüssigkeiten enthalten zum Beispiel kein Lösungsmittel, sondern nur das Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat (LiPF₆). Das Lösungsmittelgemisch kann beispielsweise Ethylencarbonat enthalten. Der Elektrolyt LP57, der die Zusammensetzung 1 M LiPF₆ in EC:EMC 3:7 aufweist, ist ein Beispiel für einen solchen Elektrolyten. Aufgrund des organischen Lösungsmittels oder Lösungsmittelgemischs werden derartige Lithium-Ionen-Zellen auch als organische Lithium-Ionen-Zellen bezeichnet.

Neben dem im Stand der Technik häufig verwendeten Lithiumhexafluorophosphat (LiPF₆) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze in Form von Tetraalkoxy- oder Tetraaryloxyboratsalzen, die fluoriert oder teilfluoriert sein können. Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organischen Lithium-Ionen-Zellen eingesetzt.

Die negative Elektrode vieler organischer Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die positive Elektrode besteht aus Lithiumcobaltoxid (LiCoO₂), welches auf ein Ableitelement aus Aluminium aufgetragen ist. Beide Elektroden weisen eine Dicke von in der Regel weniger als 100 µm auf und sind daher sehr dünn ausgebildet.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Ein weiterer Nachteil von organischen Lithium-Ionen-Zellen besteht darin, dass etwaige in Anwesenheit von Restmengen an Wasser entstehende Hydrolyseprodukte gegenüber den Zellkomponenten der wiederaufladbaren Batteriezelle sehr aggressiv sind. So entsteht beispielsweise bei dem häufig in organischen Zellen verwendeten Leitsalz LiPF₆ durch Reaktion mit Wasserspuren sehr reaktiver, aggressiver Fluorwasserstoff (HF). Aufgrund dessen muss bei der Herstellung derartiger wiederaufladbarer Batteriezellen mit einem organischen Elektrolyten auf eine Minimierung des im Elektrolyten und den Zellkomponenten enthaltenen Restwassergehalts geachtet werden. Die Produktion findet deshalb oft in kostenintensiven Trockenräumen mit extrem niedriger Luftfeuchtigkeit statt. Die zuvor beschriebenen Probleme im Hinblick auf die Stabilität und die langfristige Betriebssicherheit sind besonders schwerwiegend bei der Entwicklung von organischen Lithium-Ionen-Zellen, die zum einen sehr gute elektrische Energie- und Leistungsdaten und zum anderen eine sehr hohe Betriebssicherheit und Lebensdauer, insbesondere eine hohe Zahl nutzbarer Lade- und Entladezyklen aufweisen.

Um die Stabilität von organischen Lithium-Ionen-Zellen zu erhöhen, wurden im Stand der Technik neben LiCoO₂ andere aktive Materialien für die positive Elektrode verwendet. Beispielsweise wurden polyanionische Verbindungen wie Lithiummetallphosphate als aktives Material für die positive Elektrode in organischen Lithium-Ionen-Zellen verwendet. Unter dem Begriff "polyanionische Verbindungen" werden eine Klasse von Materialien verstanden, in denen polyanionische Struktureinheiten und Metalloxid-(MOₓ)-Polyeder durch starke kovalente Bindungen miteinander verbunden sind. Über frühe experimentelle Untersuchungen wird berichtet in

Padhi et al. "Phospho-olivines as Positive-Electrode Materials for Rechargeable Lithium Batteries", J. Electrochem. Soc., 1997, 1188-1194 *(im Nachfolgenden bezeichnet als [V3]*)

In der [V3] wurden aktive Materialien für die positive Elektrode in organischen Lithium-Ionen-Zellen untersucht, die das Polyanion (PO₄)³⁻ enthalten. Die Untersuchung bezieht sich auf Verbindungen mit diesem Polyanion (PO₄)³⁻ und den Metallen Mn, Fe, Co und Ni, die in zwei verschiedenen chemischen Strukturen vorliegen, nämlich in der Olivin-Struktur und der NASICON-Struktur. Der Einfluss dieser Strukturen auf die Einlagerung des aktiven Metalls Lithium wird beschrieben und es wird über Experimente mit organischen Lithium-Ionen-Zellen berichtet, mit denen eine geringe Anzahl von Ladezyklen (maximal 25 Zyklen) durchgeführt wurde.

Auch auf Probleme, die mit der Verwendung von Lithiumeisenphosphat (LEP)-Elektroden in organischen Lithium-Ionen-Zellen verbunden sind, wird hingewiesen. Schon für eine sehr kleine flächenspezifische Strombelastung von 0,05 mA/cm² wird eine Zellspannung von nur 3,5 V angegeben. Im Vergleich liegt die Zellspannung mit einer LiCoO₂-Elektrode bei 4 V, also etwa 14 % höher. Außerdem ist die elektronische Leitfähigkeit des LEP sehr schlecht. Dies führt zu einer starken Abnahme der Zellspannung bereits bei relativ geringen Strombelastungen. Auch die Kapazität der organischen Lithium-Ionen-Zellen ist stark von der Strombelastung abhängig und sinkt schon bei einer flächenspezifischen Strombelastung von weniger als 0,2 mA/cm² auf Werte, die diese organischen Lithium-Ionen-Zellen weitgehend unbrauchbar machen.

Eine aus dem Stand der Technik bekannte Weiterentwicklung sieht die Verwendung eines Elektrolyten auf Schwefeldioxid (SO₂)-Basis anstatt eines organischen Elektrolyten für wiederaufladbare Batteriezellen vor. Wiederaufladbare Batteriezellen, welche einen auf SO₂-basierenden Elektrolyten enthalten, weisen unter anderem eine hohe ionische Leitfähigkeit auf. Unter dem Begriff "auf SO₂-basierender Elektrolyt" ist im Sinne der Erfindung ein Elektrolyt zu verstehen, der SO₂ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch SO₂ gewährleistet ist. Das SO₂ dient also als Lösungsmittel für das Leitsalz. Das Leitsalz kann mit dem gasförmigen SO₂ einen flüssigen Solvatkomplex bilden, wobei das SO₂ gebunden und der Dampfdruck gegenüber dem reinen SO₂ merklich gesenkt wird. Es entstehen Elektrolyte mit niederem Dampfdruck. Derartige Elektrolyten auf SO₂-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Beispielsweise geht aus der EP 1 201 004 B1 (im Nachfolgenden bezeichnet als [V4]) ein auf SO₂-basierender Elektrolyt mit der Zusammensetzung LiAlCl₄ * SO₂ in Kombination mit einer positiven Elektrode aus LiCoO₂ hervor. Zur Vermeidung von störenden Zersetzungsreaktionen bei der Überladung der wiederaufladbaren Batteriezelle ab einem oberen Potential von 4,1 bis 4,2 Volt, wie beispielsweise die unerwünschte Bildung von Chlor (CI2) aus Lithiumtetrachloroaluminat (LiAlCl₄), schlägt die [V4] die Verwendung eines zusätzlichen Salzes vor.

Auch die EP 2534719 B1 (im Nachfolgenden bezeichnet als [V5]) und die US 2013/040188 A1 (im Nachfolgenden bezeichnet als [V6]) offenbaren einen auf SO₂-basierenden Elektrolyten mit unter anderem LiAlCl₄ als Leitsalz. Dieses LiAlCl₄ bildet mit dem SO₂ beispielsweise Komplexe der Formel LiAlCl₄* 1,5 mol SO₂ oder LiAlCl₄* 6 mol SO₂. Als positive Elektrode wird in der [V5] und [V6] Lithiumeisenphosphat (LiFePO₄) verwendet. LiFePO₄ hat eine geringere Ladeschlussspannung (3,7 V) im Vergleich zu LiCoO₂ (4,2 V). Die Problematik der unerwünschten Überladereaktionen tritt in dieser wiederaufladbaren Batteriezelle nicht auf, da für den Elektrolyten schädliche obere Potentiale von 4,1 Volt nicht erreicht werden.

Die Autoren Gao et al. des Artikels aus IONICS, Bd. 25, Nr. 9, 16. Mai 2019 (2019-05-16), Seiten 4137-4147 (im Nachfolgenden bezeichnet als [V7]) beschreiben die Verwendung eines auf SO₂-basierenden Elektrolyten mit LiAlCl₄ als Leitsalz für eine wiederaufladbare Lithiummetall-Batterie. Das Lithiummetall wird unter anderem auch mit Lithiumeisenphosphat (LiFePO₄) zu einer Batteriezelle kombiniert.

Ein Nachteil, der unter anderem auch bei diesen auf SO₂-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf SO₂-basierenden Elektrolyten auf eine Minimierung des im Elektrolyten und den Zellkomponenten enthaltenen Restwassergehalts geachtet werden.

Ein weiteres Problem bei den auf SO₂-basierenden Elektrolyten besteht darin, dass viele, insbesondere auch für organische Lithium-Ionen-Zellen bekannte Leitsalze nicht in SO₂ löslich sind. Messungen ergaben, dass SO₂ ein schlechtes Lösungsmittel für viele Leitsalze ist, wie z.B. Lithiumfluorid (LiF), Lithiumbromid (LiBr), Lithiumsulfat (Li₂SO₄), Lithiumbis(oxalato)borat (LiBOB), Lithiumhexafluoroarsenat (LiAsF₆), Lithiumtetrafluorborat (LiBF₄), Trilithiumhexafluoroaluminat (Li₃AlF₆,), Lithiumhexafluoroantimonat (LiSbF₆), Lithium Difluoro(oxalato)borat (LiBF₂C₂O₄), Lithium-bis(trifluoromethansulfonyl)imid (LiT-FSI), Lithiummetaborat (LiBO₂), Lithiumaluminat (LiAlO₂), Lithiumtriflat (LiCF₃SO₃) und Lithiumchlorsulfonat (LiSO₃Cl). Die Löslichkeiten dieser Leitsalze liegen in SO₂ bei ca. 10⁻² - 10⁻⁴ mol/L (siehe Tabelle 1). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

**Tabelle 1: Löslichkeiten verschiedener Leitsalze in SO₂**

| Leitsalz | Löslichkeit / mol/L in SO₂ | Leitsalz | Löslichkeit / mol/L in SO₂ |
|---|---|---|---|
| LiF | 2,1·10⁻³ | LiPF₆ | 1,5·10² |
| LiBr | 4.9·10⁻³ | LiSbF₆ | 2.8·10⁴ |
| Li₂SO₄ | 2.7·10⁻⁴ | LiBF₂(C₂O₄) | 1,4·10⁻⁴ |
| LiB(C₂O₄)₂ | 3.2·10⁻⁴ | CF₃SO₂NLiSO₂CF₃ | 1,5·10⁻² |
| Li₃PO₄ | - | LiBO₂ | 2.6·10⁻⁴ |
| Li₃AlF₆ | 2,3·10⁻³ | LiAlO₂ | 4.3·10⁻⁴ |
| LiBF₄ | 1.7·10⁻³ | LiCF₃SO₃ | 6.3·10⁻⁴ |
| LiAsF₆ | 1,4·10⁻³ | | |

Um die Einsatzmöglichkeiten sowie Eigenschaften von wiederaufladbaren Batteriezellen, die einen auf SO₂-basierenden Elektrolyten enthalten, weiter zu verbessern, liegt der vorliegenden Erfindung die Aufgabe zugrunde, eine wiederaufladbare Batteriezelle mit auf SO₂-basierenden Elektrolyten anzugeben, die gegenüber den aus dem Stand der Technik bekannten wiederaufladbaren Batteriezellen
- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf SO₂-basierenden Elektrolyten enthält, der eine für Leitsalze gute Löslichkeit aufweist und damit ein guter lonenleiter und elektronischer Isolator ist, damit der lonentransport erleichtert und die Selbstentladung auf ein Minimum beschränkt werden kann;
- einen auf SO₂-basierenden Elektrolyten enthält, der auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist;
- einen auf SO₂-basierenden Elektrolyten enthält, der eine gesteigerte Stabilität gegenüber Restmengen an Wasser in den Zellkomponenten von wiederaufladbaren Batteriezellen aufweist;
- verbesserte elektrische Leistungsdaten, insbesondere eine hohe Energiedichte aufweist;
- eine verbesserte Überladefähigkeit und Tiefentladefähigkeit und eine geringere Selbstentladung aufweist; und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen aufweisen, ohne dass sich hierbei der Elektrolyt im Betrieb der wiederaufladbaren Batteriezelle zersetzt.

Gelöst wird diese Aufgabe durch eine wiederaufladbare Batteriezelle mit den Merkmalen des Anspruchs 1. Die Ansprüche 2 bis 26 beschreiben vorteilhafte Weiterbildungen der erfindungsgemäßen wiederaufladbaren Batteriezelle.

Eine erfindungsgemäße wiederaufladbare Batteriezelle umfasst ein aktives Metall, zumindest eine positive Elektrode, zumindest eine negative Elektrode, ein Gehäuse und einen Elektrolyten. Die positive Elektrode enthält mindestens eine polyanionische Verbindung als aktives Material. Der Elektrolyt basiert auf SO₂ und enthält zumindest ein erstes Leitsalz. Dieses erste Leitsalz weist die Formel (I) 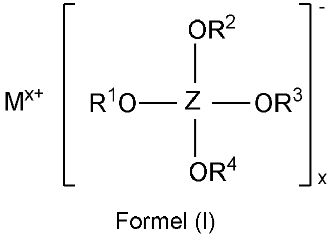 auf. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten R¹, R², R³ und R⁴ sind unabhängig voneinander ausgewählt aus der Gruppe, die gebildet wird von C₁-C₁₀ Alkyl, C₂-C₁₀ Alkenyl, C₂-C₁₀ Alkinyl, C₃-C₁₀ Cycloalkyl, C₆-C₁₄ Aryl und C₅-C₁₄ Heteroaryl. Das Zentralatom Z ist entweder Aluminium oder Bor.

Das aktive Material in Form von zumindest einer polyanionischen Verbindung kann Ionen des aktiven Metalls speichern und während des Betriebs der Batteriezelle die Ionen des aktiven Metalls abgeben und wieder aufnehmen. Wie bereits zuvor erwähnt, wird unter dem Begriff "polyanionische Verbindung" im Sinne der vorliegenden Erfindung eine Klasse von Materialien verstanden, in denen polyanionische Struktureinheiten und Metalloxid-(MOₓ)-Polyeder durch starke kovalente Bindungen miteinander verbunden sind. Die polyanionische Verbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen. Während des Ladevorgangs diffundieren die Ionen des aktiven Metalls wieder aus der Wirtsmatrix heraus.

Der in der erfindungsgemäßen wiederaufladbaren Batteriezelle verwendete auf SO₂-basierende Elektrolyt enthält SO₂ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das SO₂ gewährleistet ist. Das erste Leitsalz ist in dem Elektrolyten gelöst und zeigt darin eine sehr gute Löslichkeit. Es kann mit dem gasförmigen SO₂ einen flüssigen Solvatkomplex bilden, in welchem das SO₂ gebunden wird. In diesem Fall sinkt der Dampfdruck des flüssigen Solvatkomplexes gegenüber dem reinen SO₂ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "C₁-C₁₀ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "C₂-C₁₀ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "C₂-C₁₀ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen. Der Begriff "C₃-C₁₀ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "C₆-C₁₄ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl (C₆H₅ Gruppe), Naphthyl (C₁₀H₇ Gruppe) und Anthracyl (C₁₄H₉ Gruppe).

Der Begriff "C₅-C₁₄ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein wiederaufladbare Batteriezelle mit einem derartigen Elektrolyt hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, also im Bereich zwischen der Ladeschlussspannung und der Entladeschlussspannung, beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen. Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle.

Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf SO₂-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf SO₂-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von LiAlCl₄ geringeren Leitfähigkeit des ersten Leitsalzes gemäß Formel (I).

### Positive Elektrode

Nachfolgend sind vorteilhafte Weiterbildungen der erfindungsgemäßen wiederaufladbaren Batteriezelle im Hinblick auf die positive Elektrode beschrieben:
Wie bereits zuvor erwähnt, enthält die positive Elektrode mindestens eine polyanionische Verbindung als aktives Material. In einer ersten vorteilhaften Weiterbildung der erfindungsgemäßen Batteriezelle weist die polyanionische Verbindung die Zusammensetzung AₓM_{y}(Xᵣ₁Oₛ₁)ₐF_{b} auf. In dieser Zusammensetzung AₓM_{y}(Xᵣ₁Oₛ₁)ₐF_{b} ist
- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M mindestens ein Metall, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, und
- (Xᵣ₁Oₛ₁)ⁿ⁻ mindestens eine erste Polyanion-Struktureinheit, in welcher X mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- F das Element Fluor(F),
- n eine Zahl größer 0,
- x und y sind unabhängig voneinander Zahlen größer 0,
- r1 und s1 sind unabhängig voneinander Zahlen größer 0,
- a ist eine Zahl größer 0 und
- b ist eine Zahl größer oder gleich 0.

A ist vorzugsweise das Metall Lithium, d.h. die Verbindung kann die Zusammensetzung LiₓM_{y}(Xᵣ₁Oₛ₁)ₐF_{b} aufweisen.

Vorzugsweise weist die polyanionische Verbindung die Zusammensetzung AₓM_{y}(Xᵣ₁Oₛ₁)ₐF_{b} auf, worin x, y, a, r1, s1 und n unabhängig voneinander Zahlen größer als 0 und b eine Zahl größer oder gleich 0 ist.

Der Index y bezieht sich auf die Gesamtheit der Metalle, die durch M repräsentiert werden. Umfasst zum Beispiel M zwei Metalle M¹ und M², so gilt für den Index y: y=y1+y2, wobei y1und y2 die Indizes der Metalle M¹ und M² darstellen. Die Indizes x und y, r1 und s1, a und b müssen so gewählt werden, dass eine Ladungsneutralität innerhalb der Zusammensetzung herrscht.

Beispiele für Verbindungen bei denen M zwei Metalle umfasst sind Lithiummanganeisenphosphate der Zusammensetzung LiₓMn_{y1}Fe_{y2}PO₄ mit M¹=Mn und M²=Fe.

Das Metall M ist in einer weiteren vorteilhaften Weiterbildung der erfindungsgemäßen Batteriezelle ausgewählt aus der Gruppe, die gebildet wird von den Elementen Titan, Vanadium, Chrom, Mangan, Eisen, Cobalt, Nickel, Kupfer und Zink.

Weiterhin kann das Metall A auch ausgewählt sein aus der Gruppe, die gebildet wird von Lithium, Natrium, Calcium oder Zink. Bevorzugt ist das Metall A Lithium oder Natrium.

Bei der ersten Polyanion-Struktureinheit kann es sich zum Beispiel um Strukturen der Zusammensetzungen (XO₄)ⁿ⁻, (XₘO₃ₘ₊₁)ⁿ⁻ oder (XO₃)ⁿ⁻ handeln, worin m und n unabhängig voneinander Zahlen größer 0 sind. Beispiele für solche Anionen sind (SO₄)²⁻, (PO₄)³⁻, (SiO₄)²⁻, (AsO₄)³⁻, (MoO₄)²⁻, (WO₄)²⁻, (P₂O₇)⁴⁻, (CO₃)²⁻ und (BO₃)³⁻.

Polyanionische Verbindungen mit der (PO₄)³⁻-Polyanion-Struktureinheit weisen bevorzugt die Zusammensetzung AₓM_{y}(PO₄)ₐF_{b} auf. Weiter bevorzugt sind die Zusammensetzungen LiFePO₄, NaFePO₄, LiMnPO₄, LiCoPO₄, LiNiPO₄, LiVPO₄F, Li(Mn_{0.7}Fe_{0.3})PO₄ und Li(Mn_{0.6}Fe_{0.4})PO₄.

Polyanionische Verbindungen mit der (SiO₄)⁴⁻-Polyanion-Struktureinheit weisen bevorzugt die Zusammensetzung AₓM_{y}(SiO₄)ₐF_{b} auf. Weiter bevorzugt sind die Zusammensetzungen Li₂FeSiO₄, Li₂MnSiO₄, Li₂CoSiO₄, Li₂Mn_{0.2}Fe_{0.8}SiO₄ und Li₂Mn_{0.5}Fe_{0.5}SiO₄.

Polyanionische Verbindungen mit der (SO₄)⁴⁻-Polyanion-Struktureinheit weisen bevorzugt die Zusammensetzung AₓM_{y}(SO₄)ₐF_{b} auf. Weiter bevorzugt sind die Zusammensetzungen LiFeSO₄F, LiCoSO₄F, LiNiSO₄F und LiMnSO₄F.

Polyanionische Verbindungen mit der (BO₃)³⁻-Polyanion-Struktureinheit weisen bevorzugt die Zusammensetzung AₓM_{y}(BO₃)ₐF_{b} auf. Weiter bevorzugt sind die Zusammensetzungen LiFeBO₃, LiCoBO₃ und LiMnBO₃.

Die polyanionische Verbindungen können auch mindestens zwei voneinander abweichende Polyanion-Struktureinheiten (Xᵣ₁Oₛ₁)ⁿ⁻ und (Gᵣ₂Oₛ₂)^{k-} aufweisen, worin n, k, r1, r2, s1 und s2 unabhängig voneinander Zahlen größer 0 sind. In diesem Fall weist die polyanionische Verbindung vorzugsweise die Zusammensetzung AₓM_{y}(Xᵣ₁Oₛ₁)ⁿ⁻a(Gᵣ₂Oₛ₂)^{k-}F_{b} auf, worin
- (Xᵣ₁Oₛ₁)ⁿ⁻ mindestens die erste Polyanion-Struktureinheit ist, in welcher X mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- (Gᵣ₂Oₛ₂)^{k-} mindestens eine zweite Polyanion-Struktureinheit ist, in welcher X mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium,
- M mindestens ein Metall ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente,
- F das Element Fluor (F) ist,
- x und y unabhängig voneinander Zahlen größer 0 sind,
- a eine Zahl größer 0 ist und
- b eine Zahl größer oder gleich 0 ist

Die Indizes x und y, r1, s1, r2, s2, a und b müssen so gewählt werden, dass eine Ladungsneutralität innerhalb der Zusammensetzung AₓM_{y}(Xᵣ₁Oₛ₁)ₐ(Gᵣ₂Oₛ₂)F_{b} herrscht.

Bei der zweiten Polyanion-Struktureinheit kann es sich ebenfalls um Strukturen der Zusammensetzungen (XO₄)^{k-}, (XₘO₃ₘ₊₁)^{k-} oder (XO₃)^{k-} handeln, worin m und k unabhängig voneinander Zahlen größer 0 sind. Beispiele für solche Polyanion-Struktureinheiten sind (SO₄)²⁻, (PO₄)³⁻, (SiO₄)²⁻, (ASO₄)³⁻, (MoO₄)²⁻, (WO₄)²⁻, (P₂O₇)⁴⁻, (CO₃)²⁻ und (BO₃)³⁻.

Die polyanionische Verbindung mit zumindest zwei voneinander abweichenden Polyanion-Struktureinheiten kann insbesondere die Zusammensetzung AₓM_{y}(XO₃)(XO₄) aufweisen. Insbesondere handelt es sich bei der XO₃-Struktureinheit um (CO₃)²⁻ oder (BO₃)³⁻ und bei der XO₄-Struktureinheit um (SO₄)²⁻, (PO₄)³⁻ oder (SiO₄)²⁻ . Beispiele für polyanionische Verbindungen mit zwei unterschiedliche Polyanion-Struktureinheiten sind Li₃Fe_{0.2}Mn_{0.8}CO₃PO₄ und Na₃Fe_{0.2}Mn_{0.8}CO₃PO₄.

Es liegt im Rahmen der Erfindung, dass die positive Elektrode als aktives Material mindestens eine der zuvor beschriebenen polyanionischen Verbindungen oder aber auch eine Kombination der polyanionischen Verbindungen enthält. Unter einer Kombination der polyanionischen Verbindungen versteht man eine positive Elektrode, die mindestens zwei der beschriebenen polyanionischen Verbindungen als aktives Material enthält.

Es liegt weiterhin im Rahmen der Erfindung, dass die positive Elektrode als aktives Material auch eine Kombination aus zumindest einer der zuvor beschriebenen polyanionischen Verbindungen und zumindest einer weiteren Verbindung enthält, welche keine polyanionische Verbindung ist. Die Kombination kann auch mehrere der zuvor beschriebenen polyanionischen Verbindungen und/oder mehrere weitere Verbindungen umfassen, die keine polyanionischen Verbindungen sind. Diese weitere Verbindung kann z.B. ein Schichtoxid, wie z.B. Lithiumnickelmangancobaltoxid, sein.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material.

Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 µm bis 20µm auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die Positive Elektrode eine Gesamtdicke von mindestens 20 µm, bevorzugt mindestens 40 µm und besonders bevorzugt mindestens 60 µm aufweise. Die maximalen Dicke beträgt höchstens 200 µm, bevorzugt höchstens 150 µm und besonders bevorzugt höchstens 100 µm. Die flächenspezifische Kapazität der positiven Elektrode bezogen auf die Beschichtung einer Seite weist bei der Verwendung eines planaren Ableitelements vorzugsweise mindestens 0,5 mAh/cm² auf, wobei folgende Werte in dieser Reihenfolge weiter bevorzugt sind: 1 mAh/cm², 3 mAh/cm², 5 mAh/cm², 10 mAh/cm², 15 mAh/cm², 20 mAh/cm².

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die Positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 mAh/cm² beträgt, wobei folgende Werte in dieser Reihenfolge weiter bevorzugt sind 5 mAh/cm², 15 mAh/cm², 25 mAh/cm², 35 mAh/cm², 45 mAh/cm², 55 mAh/cm², 65 mAh/cm², 75 mAh/cm². Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm². Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

### Elektrolyt

Nachfolgend sind vorteilhafte Weiterbildungen der wiederaufladbaren Batteriezelle im Hinblick auf den auf SO₂-basierenden Elektrolyten beschrieben.

In einer weiteren vorteilhaften Ausgestaltung der wiederaufladbaren Batteriezellen sind die Substituenten R¹, R², R³ und R⁴ des ersten Leitsalzes unabhängig voneinander ausgewählt aus der Gruppe, die gebildet wird von
- C₁-C₆ Alkyl; bevorzugt von C₂-C₄ Alkyl; besonders bevorzugt von den Alkylgruppen 2-Propyl, Methyl und Ethyl;
- C₂-C₆ Alkenyl; bevorzugt von C₂-C₄ Alkenyl; besonders bevorzugt von den Alkenylgruppen Ethenyl und Propenyl;
- C₂-C₆-Alkinyl; bevorzugt von C₂-C₄-Alkinyl;
- C₃-C₆ Cycloalkyl;
- Phenyl; und
- C₅-C₇ Heteroaryl.

Der Begriff "C₁-C₆ Alkyl" umfasst im Fall dieser vorteilhaften Ausgestaltung des auf SO₂-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind C₂-C₄ Alkyle bevorzugt. Besonders bevorzugt sind die C₂-C₄ Alkyle 2-Propyl, Methyl und Ethyl.

Der Begriff "C₂-C₆ Alkenyl" umfasst im Fall dieser vorteilhaften Ausgestaltung des auf SO₂-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei C₂-C₄ Alkenyle bevorzugt sind. Besonders bevorzugt sind Ethenyl und 1-Propenyl. Der Begriff "C₂-C₆-Alkinyl" umfasst im Fall dieser vorteilhaften Ausgestaltung des auf SO₂-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind C2-C4-Alkinyle.

Der Begriff "C₃-C₆ Cycloalkyl" umfasst im Fall dieser vorteilhaften Ausgestaltung des auf SO₂-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "C₅-C₇ Heteroaryl" umfasst im Fall dieser vorteilhaften Ausgestaltung des auf SO₂-basierenden Elektrolyten Phenyl und Naphtyl.

Zur Verbesserung der Löslichkeit des ersten Leitsalzes in dem auf SO₂-basierenden Elektrolyten sind die Substituenten R¹, R², R³ und R⁴ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe, die gebildet wird von C₁-C₄-Alkyl, C₂-C₄-Alkenyl, C₂-C₄-Alkinyl, Phenyl und Benzyl. Die chemischen Gruppen C₁-C₄-Alkyl, C₂-C₄-Alkenyl, C₂-C₄-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten R¹, R², R³ und R⁴ durch das Fluoratom und/oder durch die chemische Gruppe ersetzt sind.

Eine besonders hohe Löslichkeit des ersten Leitsalzes in dem auf SO₂-basierenden Elektrolyten kann dadurch erreicht werden, dass zumindest einer der Substituenten R¹, R², R³ und R⁴ eine CF₃-Gruppe oder eine OSO₂CF₃-Gruppe ist.

In einer weiteren vorteilhaften Weiterbildung der wiederaufladbaren Batteriezelle ist das erste Leitsalz ausgewählt aus der Gruppe, die gebildet wird von

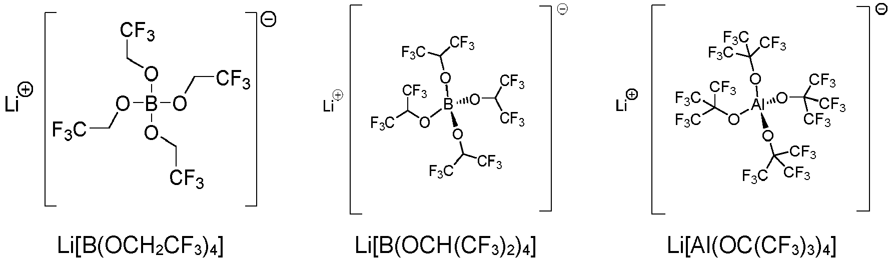

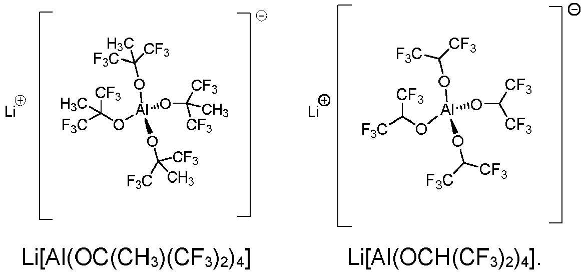

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere LiAlCl₄.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetrafluor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:
(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol SO₂, bevorzugt mindestens 1 Mol SO₂, weiter bevorzugt mindestens 5 Mol SO₂, weiter bevorzugt mindestens 10 Mol SO₂ und besonders bevorzugt mindestens 20 Mol SO₂ je Mol Leitsalz enthält. Der Elektrolyt kann auch sehr hohe molare Anteile an SO₂ enthalten, wobei der bevorzugte obere Grenzwert mit 2600 Mol SO₂ je Mol Leitsalz angegeben werden kann und Obergrenzen von 1500, 1000, 500 und 100 Mol SO₂ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf SO₂-basierende Elektrolyte mit einem derartigen Konzentrationsverhältnis zwischen SO₂ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an SO₂ im Elektrolyten wirkt sich auf dessen Leitfähigkeit aus. Somit kann durch die Wahl der SO₂-Konzentration die Leitfähigkeit des Elektrolyten an die geplante Verwendung einer mit diesem Elektrolyten betriebenen wiederaufladbaren Batteriezelle angepasst werden.

Der Gesamtgehalt von SO₂ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% SO₂ bezogen auf die Gesamtmenge des in der wiederaufladbaren Batteriezelle enthaltenen Elektrolyten enthalten, wobei Werte von 20 Gew% SO₂, 40 Gew% SO₂ und 60 Gew% SO₂ weiter bevorzugt sind. Der Elektrolyt kann auch bis zu 95 Gew% SO₂ enthalten, wobei Maximalwerte von 80 Gew% SO₂ und 90 Gew% SO₂ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf SO₂-basierenden Elektrolyten betriebenen wiederaufladbaren Batteriezelle. Besonders bevorzugt ist der auf SO₂-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:
(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

### Aktives Metall

Nachfolgend sind vorteilhafte Weiterbildungen der erfindungsgemäßen wiederaufladbaren Batteriezelle im Hinblick auf das aktive Metall beschrieben:
In einer ersten vorteilhaften Weiterbildung der wiederaufladbare Batteriezelle ist das aktive Metall
- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

### Negative Elektrode

Nachfolgend sind vorteilhafte Weiterbildungen der erfindungsgemäßen wiederaufladbaren Batteriezelle im Hinblick auf die negative Elektrode beschrieben:
Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem MesoCarbon MicroBeads (MCMB), mit kohlenstoffbeschichtetem Graphit oder amorphem Kohlenstoff vorliegt.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. Li₄Ti₅O₁₂).

Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithium-speichernde Metalle und Metalllegierungen (z.B. Si, Ge, Sn, SnCoₓC_{y}, SnSiₓ und dergleichen) und Oxide der Lithium-speichernden Metalle und Metalllegierungen (z.B. SnOₓ, SiOₓ, oxidische Gläser von Sn, Si und dergleichen).

Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden (MnOₓ), Eisenoxiden (FeOₓ), Cobaltoxiden (CoOₓ), Nickeloxiden (NiOₓ), Kupferoxiden (CuOₓ) oder Metallhydride in Form von Magnesiumhydrid (MgH₂), Titanhydrid (TiH₂), Aluminiumhydrid (AlH₃) und Bor-, Aluminium- und Magnesiumbasierte ternäre Hydride und dergleichen sein.

In einer weiteren vorteilhaften Weiterbildung der erfindungsgemäßen wiederaufladbaren Batteriezelle umfasst die negative Elektrode ein Metall, insbesondere metallisches Lithium.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 µm bis 20µm auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die negative Elektrode eine Gesamtdicke von mindestens 20 µm, bevorzugt mindestens 40 µm und besonders bevorzugt mindestens 60 µm aufweisen. Die maximalen Dicke beträgt höchstens 200 µm, bevorzugt höchstens 150 µm und besonders bevorzugt höchstens 100 µm. Die flächenspezifische Kapazität der negativen Elektrode bezogen auf die Beschichtung einer Seite weist bei der Verwendung eines planaren Ableitelements vorzugsweise mindestens 0,5 mAh/cm² auf, wobei folgende Werte in dieser Reihenfolge weiter bevorzugt sind: 1 mAh/cm², 3 mAh/cm², 5 mAh/cm², 10 mAh/cm², 15 mAh/cm², 20 mAh/cm².

Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachten aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements, insbesondere in Form eines Metallschaums vorzugsweise mindestens 2,5 mAh/cm² beträgt, wobei folgende Werte in dieser Reihenfolge weiter bevorzugt sind: 5 mAh/cm², 15 mAh/cm², ²⁵ mAh/cm², ³⁵ mAh/cm², ⁴⁵ mAh/cm², ⁵⁵ mAh/cm², ⁶⁵ mAh/cm², ⁷⁵ mAh/cm². Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm². Diese Beladung der negativen Elektrode wirkt sich positiv auf den Ladevorgang sowie den Entladevorgang der wiederaufladbaren Batteriezelle aus.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche aufweisen, Beispiele für Leitfähigkeitsadditive sind partikulärer Kohlenstoff (carbon black, Super P, acetylen black), faserartiger Kohlenstoff (CarbonNanoTubes CNT, Kohlenstoff(nano)fasern), feinverteilte Graphite und Graphen(-Nanosheets).

### Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere Positive Elektroden umfasst, die alternierend gestapelt in dem Gehäuse angeordnet sind.

Hierbei sind die positiven Elektroden und die negativen Elektroden vorzugsweise jeweils durch Separatoren voneinander elektrisch getrennt.

Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren lonenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.
- Figur 1:: zeigt ein erstes Ausführungsbeispiel einer erfindungsgemäßen wiederaufladbaren Batteriezelle in einer Querschnittsdarstellung;
- Figur 2:: zeigt eine elektronenmikroskopische Aufnahme der dreidimensionalen porösen Struktur des Metallschaums des ersten Ausführungsbeispiels aus Figur 1 als Detaildarstellung;
- Figur 3:: zeigt ein zweites Ausführungsbeispiel einer erfindungsgemäßen wiederaufladbaren Batteriezelle in einer Querschnittsdarstellung;
- Figur 4:: zeigt ein Detail des zweiten Ausführungsbeispiels aus Figur 3;
- Figur 5:: zeigt ein drittes Ausführungsbeispiel der erfindungsgemäßen wiederaufladbaren Batteriezelle in einer Explosionsdarstellung;
- Figur 6:: zeigt einen Potentialverlauf in Volt [V] als Funktion der prozentualen Ladung einer Test-Vollzelle mit Lithiumeisenphosphat LiFePO₄ (LEP) als aktives Material der positiven Elektrode, wobei die Ladeschlussspannung 5 Volt beträgt;
- Figur 7:: zeigt die Entladekapazität als Funktion der Zykelzahl von Test-Vollzellen, die Lithiumeisenphosphat LiFePO₄ (LEP) als aktives Material der positiven Elektrode enthalten, wobei das obere Potential schrittweise von 4,5 V auf 5,0 V erhöht wird;
- Figur 8:: zeigt die Entladekapazität als Funktion der Zykelzahl einer Test-Vollzelle mit Lithiumeisenphosphat LiFePO₄ als aktives Material der positiven Elektrode, wobei die Ladeschlussspannung 3,6 Volt beträgt;
- Figur 9:: zeigt die Entladekapazität als Funktion der Zykelzahl einer Test-Vollzelle mit Lithiumeisenmanganphosphat Li(Fe_{0.3}Mn_{0.7})PO₄ als aktives Material der positiven Elektrode, wobei die Ladeschlussspannung 4,5 Volt beträgt;
- Figur 10:: zeigt einen Potentialverlauf in Volt [V] als Funktion der prozentualen Ladung einer Test-Vollzelle mit Lithiumeisenkobaltphosphat LiFeCoPO₄ als aktives Material der positiven Elektrode, wobei die Ladeschlussspannung 5 Volt beträgt;
- Figur 11:: zeigt das Potenzial in [V] von einer Referenz-Test-Vollzelle und zwei Test-Vollzellen beim Laden einer negativen Elektrode als Funktion der Kapazität, die bezogen ist auf die theoretische Kapazität der negativen Elektrode, während einer Deckschichtbildung auf der negativen Elektrode.
- Figur 12:: zeigt den Potentialverlauf bei der Entladung in Volt [V] als Funktion der prozentualen Ladung von drei Test-Vollzellen, die Lithiumeisenphosphat LiFePO₄ (LEP) als aktives Material der positiven Elektrode aufweisen und mit drei Elektrolyten 1, 3 und 4 befüllt wurden;
- Figur 13:: zeigt die Leitfähigkeit in [mS/cm] eines ersten Elektrolyten 1 in Abhängigkeit der Konzentration von der Verbindung 1;
- Figur 14:: zeigt die Leitfähigkeit in [mS/cm] des dritten Elektrolyten 3 in Abhängigkeit der Konzentration von der Verbindung 3;

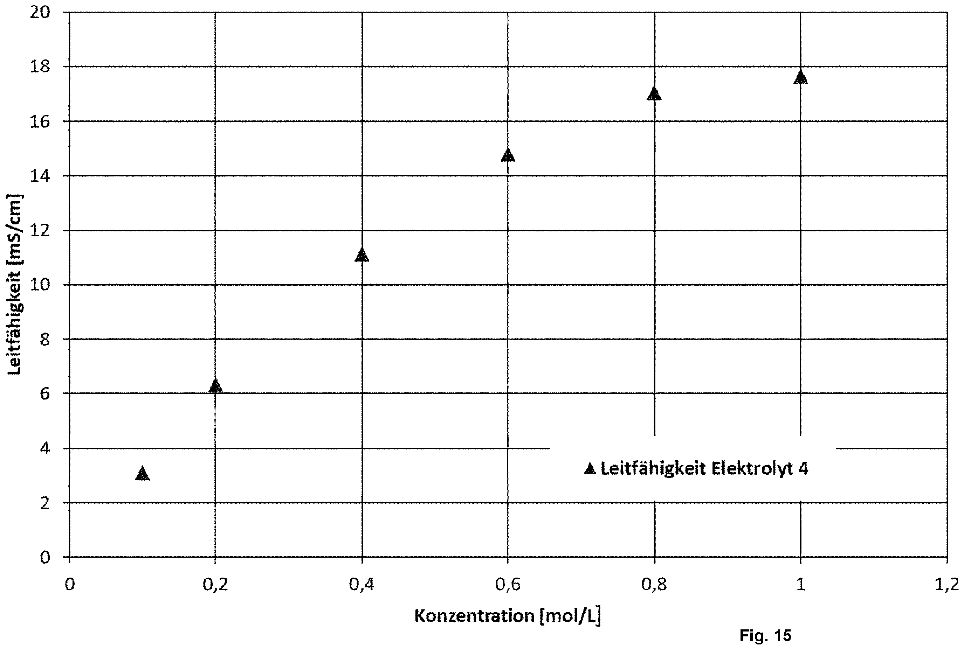

- Figur 15:: zeigt die Leitfähigkeit in [mS/cm] des vierten Elektrolyten 4 in Abhängigkeit der Konzentration von der Verbindung 4.

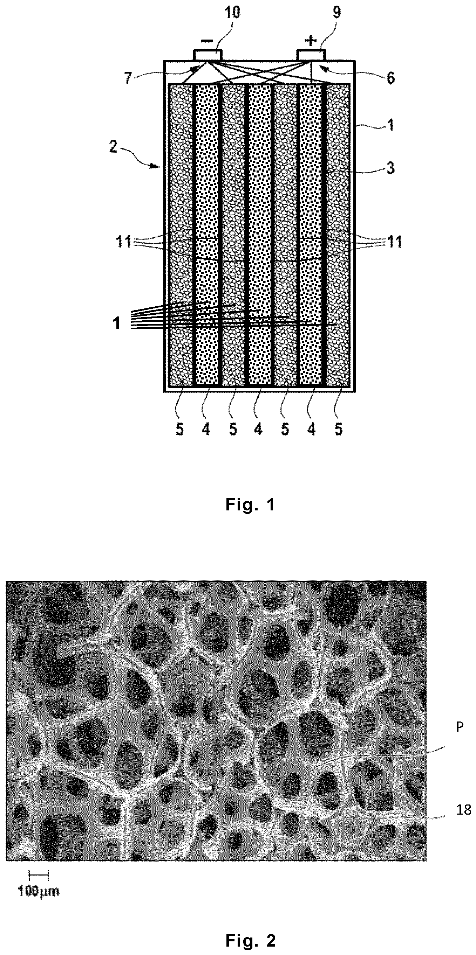

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf SO₂-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um LiFePO₄.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist jeweils in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 µm haben, also verhältnismäßig groß sind. Bei diesem Metallschaum handelt es sich um einen Metallschaum aus Nickel.

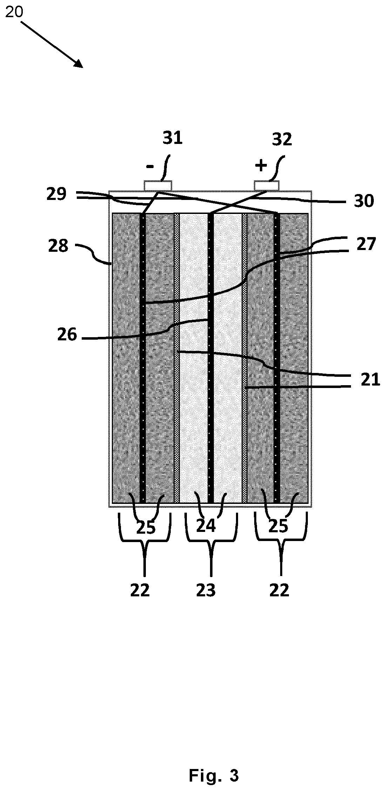

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

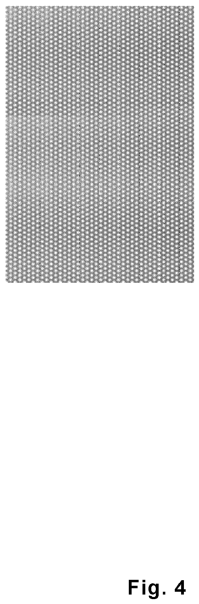

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 µm auf.

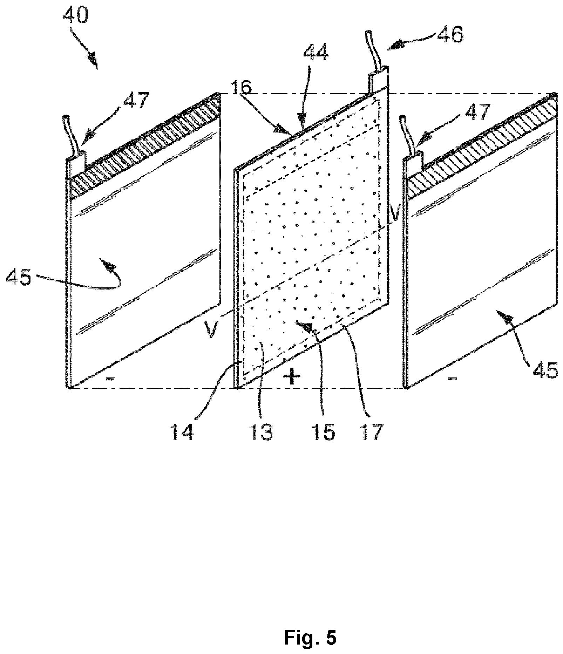

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

### Beispiel 1: Herstellung eines Referenzelektrolyten

Ein für die nachfolgend beschriebenen Beispiele verwendeter Referenzelektrolyt wurde nach dem in der Patentschrift EP 2 954 588 B1 beschriebenen Verfahren hergestellt (im Nachfolgenden bezeichnet als [V8]). Zunächst wurde Lithiumchlorid (LiCI) unter Vakuum bei 120 °C für drei Tage getrocknet. Aluminiumpartikel (Al) wurden unter Vakuum für zwei Tage bei 450 °C getrocknet. LiCI, Aluminiumchlorid (AlCl₃) und Al wurden in einem Molverhältnis AlCl₃:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich SO₂ zugeführt bis das gewünschte molare Verhältnis von SO₂ zu LiAlCl₄ gebildet wurde. Der so gebildete Referenzelektrolyt hatte die Zusammensetzung LiAlCl₄ * x SO₂, wobei x abhängig von der zugeführten Menge an SO₂ ist.

### Beispiel 2: Herstellung von vier Ausführungsbeispielen 1, 2, 3 und 4 eines auf SO₂-basierenden Elektrolyten für eine Batteriezelle

Für die nachfolgend beschriebenen Experimente wurden vier Ausführungsbeispiele 1, 2, 3 und 4 des auf SO₂-basierenden Elektrolyten hergestellt (nachfolgend bezeichnet als Elektrolyte 1, 2, 3 und 4). Hierfür wurden zunächst vier unterschiedliche erste Leitsalze nach Formel (I) gemäß einem in den folgenden Dokumenten [V9], [V10] und [V11] beschriebenen Herstellungsverfahren hergestellt:
[V9] "I. Krossing, Chem. Eur. J. 2001, 7, 490;
[V10] S. M. Ivanova et al., Chem. Eur. J. 2001, 7, 503;
[V11] Tsujioka et al., J. Electrochem. Soc., 2004, 151, A1418"

Diese vier unterschiedlichen, ersten Leitsalze nach Formel (I) werden nachfolgend als Verbindungen 1, 2, 3 und 4 bezeichnet. Sie stammen aus der Familie der Polyfluoroalkoxyaluminate und wurden gemäß folgender Reaktionsgleichung ausgehend von LiAlH₄ und dem entsprechenden Alkohol R-OH mit R¹=R²=R³=R⁴ in Hexan hergestellt.

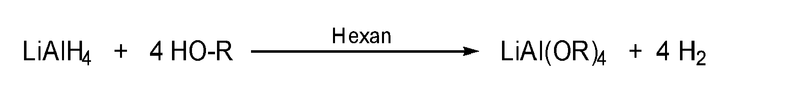

Hierdurch wurden die nachfolgend darstellten Verbindungen 1, 2, 3 und 4 mit den Summen- bzw. Strukturformeln gebildet:

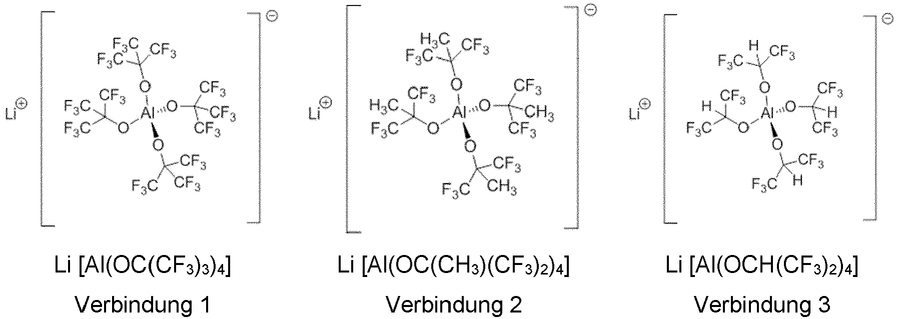

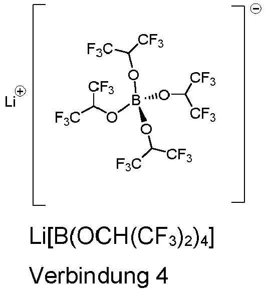

Zur Aufreinigung wurden die Verbindungen 1, 2, 3 und 4 zunächst umkristallisiert. Hierdurch wurden Reste des Edukts LiAlH₄ aus dem ersten Leitsalz entfernt, da dieses Edukt möglicherweise mit eventuell vorhandenen Wasserspuren in SO₂ zur Funkenbildung führen könnte.

Danach erfolgte die Lösung der Verbindungen 1, 2, 3 und 4 in SO₂. Hierbei wurde herausgefunden, dass sich die Verbindungen 1, 2, 3 und 4 in SO₂ gut lösen.

Die Herstellung der Elektrolyte 1, 2, 3 und 4 wurde bei Tieftemperatur oder unter Druck gemäß den nachfolgend aufgelisteten Verfahrensschritten 1 bis 4 durchgeführt:
1) Vorlage der jeweiligen Verbindung 1, 2, 3 und 4 in jeweils einem Druckkolben mit Steigrohr,
2) Evakuieren der Druckkolben,
3) Einströmen von flüssigem SO₂ und
4) Wiederholung der Schritte 2 + 3 bis die Zielmenge an SO₂ zugegeben worden ist.

Die jeweilige Konzentration der Verbindungen 1, 2, 3 und 4 in den Elektrolyten 1, 2, 3 und 4 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3 und 4 und dem Referenzelektrolyten wurden die nachfolgend beschriebenen Experimente durchgeführt.

### Beispiel 3: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler und ein Bindemittel auf. Die negativen Elektroden enthielten Graphit als aktives Material und ebenfalls ein Bindemittel. Wie im Experiment erwähnt können die negativen Elektroden auch ein Leitfähigkeitsadditiv enthalten. Das aktive Material der positiven Elektrode ist im jeweiligen Experiment benannt. Das Ableitelement der positiven und der negativen Elektrode bestand aus Nickel. Unter anderem ist das Ziel der Untersuchungen, die Verwendung von verschiedenen aktiven Materialien für die positive Elektrode in einer erfindungsgemäßen Batteriezelle in Kombination mit dem erfindungsgemäßen Elektrolyten zu bestätigen. Tabelle 2 zeigt, welche polyanionische Verbindungen als aktive Materialien der positiven Elektrode untersucht wurden und welche oberen Potentiale dabei verwendet wurden.

**Tabelle 2: Untersuchte polyanionische Verbindungen**

| Experiment | Aktives Material | Oberes Potential |
|---|---|---|
| 1 | Lithiumeisenphosphat LiFePO₄ (LEP) | 4,5-5,0 V |
| 2 | Lithiumeisenphosphat LiFePO₄ (LEP) | 3,6 V |
| 3 | Lithiumeisenmanganphosphat Li(Fe_{0.3}Mn_{0.7})PO₄ | 4,5 V |
| 4 | Lithiumeisenkobaltphosphat LiFeCoPO₄ | 5,0 V |

Die Test-Vollzellen wurden jeweils mit dem für die Experimente benötigten Elektrolyten, d. h. entweder mit dem Referenzelektrolyten oder den Elektrolyten 1, 2, 3 oder 4 befüllt.

Für jedes Experiment wurden mehrere, d.h. zwei bis vier identische Test-Vollzellen hergestellt. Die in den Experimenten vorgestellten Ergebnisse sind jeweils Mittelwerte aus den für die identischen Test-Vollzellen erhaltenen Messwerte.

### Beispiel 4: Messung in Test-Vollzellen

Bei Messungen in Test-Vollzellen wird z.B. die Entladekapazität über die Zykelzahl bestimmt werden.

Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer sogenannten I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Zelle in einer Stunde ge- bzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Test-Vollzellen mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Diese Mittelwerte der Entladekapazitäten werden jeweils in Prozent der Nennkapazität ausgedrückt, oft normiert auf die maximale Kapazität, die im jeweiligen Versuch erreicht wurde. Diese Mittelwerte der Entladekapazitäten werden jeweils in Prozent der Nennkapazität ausgedrückt. Die Nennkapazität wird erhalten, indem von der theoretischen Kapazität der positiven Elektrode diejenige Kapazität subtrahiert wird, die im ersten Zyklus für die Bildung einer Deckschicht auf der negativen Elektrode verbraucht wird. Diese Deckschicht wird beim ersten Laden der Test-Vollzelle auf der negativen Elektrode gebildet. Für diese Deckschichtbildung werden Lithiumionen irreversibel verbraucht, sodass der jeweiligen Test-Vollzelle weniger zykelbare Kapazität für die Folgezyklen zur Verfügung steht.

### Experiment 1: Test-Vollzellen mit Lithiumeisenphosphat LiFePO₄ (LEP) als aktives Elektrodenmaterial - hohes oberes Potential

Es wurde eine Test-Vollzelle gemäß Beispiel 3 mit Lithiumeisenphosphat LiFePO₄ (LEP) als aktivem Elektrodenmaterial der positiven Elektrode hergestellt. Die Test-Vollzelle wurde mit dem in Beispiel 2 beschriebenen Elektrolyten 1 befüllt.

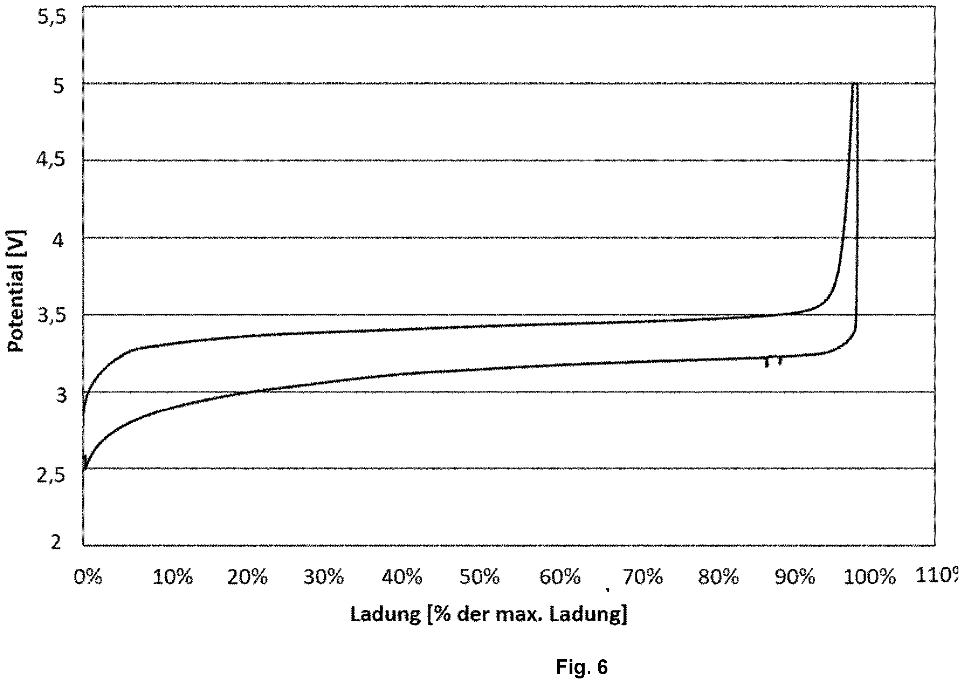

Figur 6 zeigt den Potentialverlauf in Volt [V] über der prozentualen Ladung, die auf die maximale Ladung der Test-Vollzelle bezogen ist. Die Test-Vollzelle wurde mit einer Stromstärke von 50 mA bis zu einem oberen Potential von 5 V geladen. Das Potential wurde so lange gehalten, bis der Ladestrom auf 40 mA abgesunken war. Danach erfolgte die Entladung mit einer Stromstärke von 50 mA bis zu einem Entladepotential von 2,5 Volt.

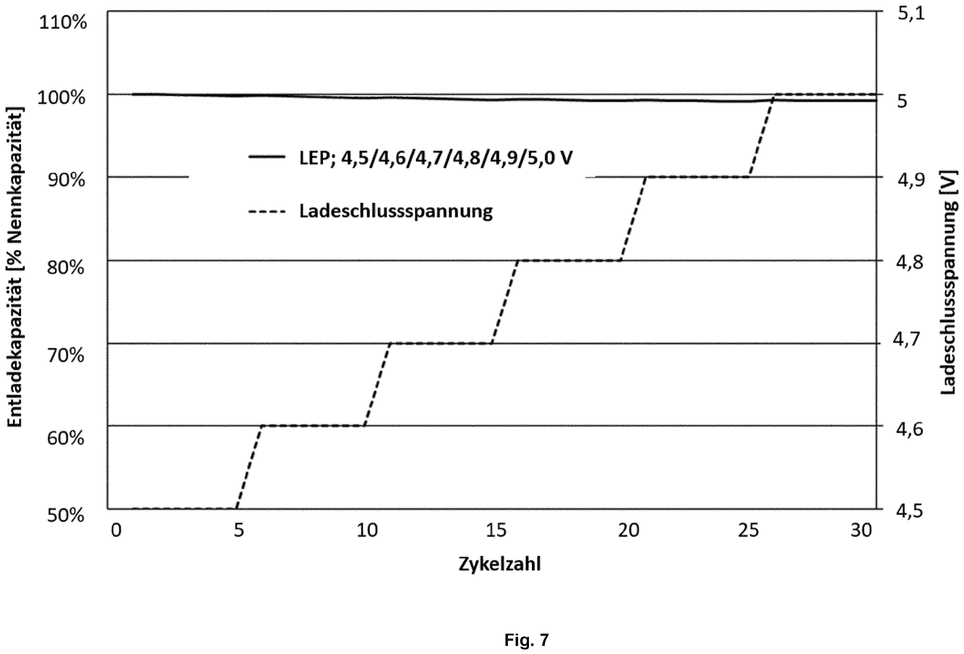

Das Lade-/ Entlade-Experiment wurde nochmals wiederholt, mit dem Unterschied, dass die obere Potentialgrenze beim Laden von 4,5 Volt in 0,1 Volt-Schritten bis auf 5,0 Volt erhöht wurde. Mit jedem Potential wurden 5 Zyklen durchgeführt. Figur 7 zeigt die Entladekapazität und das dazugehörige Ladepotential (obere Potential).

Die erreichten Entladekapazitäten sind für jedes Ladepotential nahezu identisch und liegen bei 99%. Das bedeutet, dass die erhaltenen Entladekapazitäten unabhängig vom Ladepotential sind. Ein höheres Ladepotential bedingt also keine unerwünschten Reaktionen, wie z.B. eine Zersetzung des Elektrolyten oder eine irreversible Zerstörung des aktiven Materials LEP.

### Experiment 2: Test-Vollzellen mit Lithiumeisenphosphat LiFePO₄ (LEP) als aktives Elektrodenmaterial

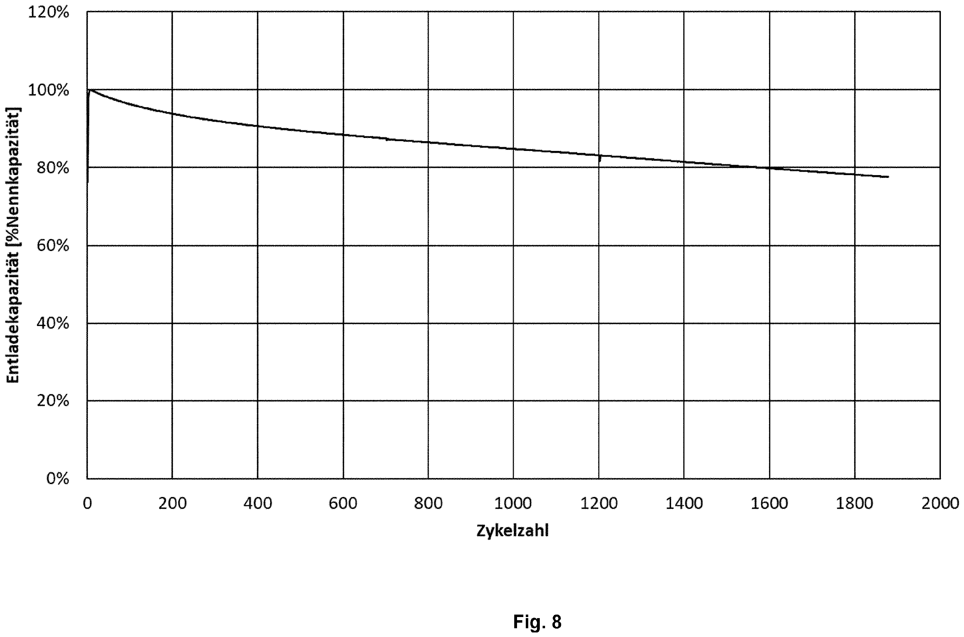

Es wurde eine Test-Vollzelle gemäß Beispiel 3 mit Lithiumeisenphosphat LiFePO₄ (LEP) als aktives Material der positiven Elektrode hergestellt. Die Test-Vollzelle wurde mit dem in Beispiel 2 beschriebenen Elektrolyten 1 befüllt. Zur Ermittlung der Entladekapazitäten (siehe Beispiel 4) wurde die Test-Vollzelle entsprechend der Beschreibung in Experiment 1 gezykelt. Das obere Potential der Test-Vollzelle liegt bei 3,6 Volt. Figur 8 zeigt die Entladekapazitäten der Test-Vollzelle als Funktion der Zykelzahl. Diese Mittelwerte der Entladekapazitäten werden jeweils in Prozent der Nennkapazität ausgedrückt. Die Test-Vollzelle zeigt ein ausgewöhnlich stabiles Verhalten der Entladekapazität über mehr als 1880 Zyklen. Auch nach dieser sehr hohen Zykelzahl wird noch eine Kapazität von 78% erhalten. Die Kombination von einer positiven Elektrode mit einer polyanionischen Verbindung, wie z.B. Lithiumeisenphosphat, in Verbindung mit dem Elektrolyten 1 führt zu einer äußerst langlebigen Test-Vollzelle mit guter Stabilität.

### Experiment 3: Test-Vollzellen mit Lithiumeisenmanganphosphat Li(Fe_{0.3}Mn_{0.7})PO₄ als aktives Elektrodenmaterial

Um weitere Lithiummetallphosphate als aktives Elektrodenmaterial zu testen, wurde in einem weiteren Experiment eine Test-Vollzelle gemäß Beispiel 3 hergestellt. Das aktive Material der positiven Elektroden (Kathoden) bestand aus Lithiumeisenmanganphosphat Li(Fe_{0.3}Mn_{0.7})PO₄-

Die Test-Vollzelle wurde mit dem in Beispiel 2 beschriebenen Elektrolyten 1 befüllt. Zur Ermittlung der Entladekapazitäten (siehe Beispiel4) wurde die Test-Vollzelle entsprechend der Beschreibung in Experiment 1 gezykelt. Das obere Potential der erfindungsgemäßen Zellen bei 4,5 Volt.

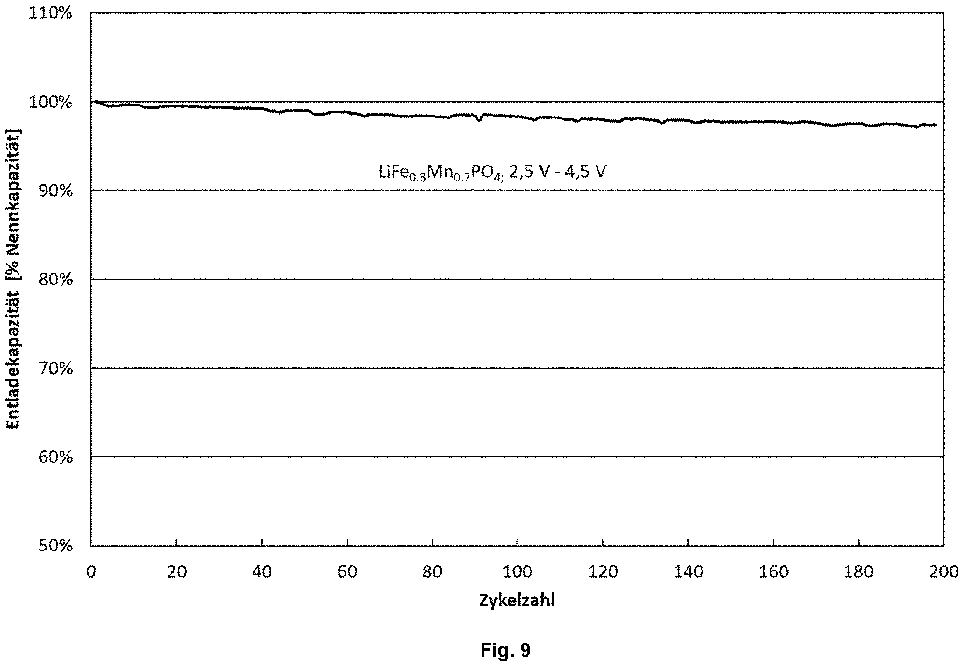

Figur 9 zeigt Mittelwerte für die Entladekapazitäten der Test-Vollzelle als Funktion der Zykelzahl. Diese Mittelwerte der Entladekapazitäten werden jeweils in Prozent der Nennkapazität ausgedrückt. Die Zelle zeigt ein sehr stabiles Verhalten der Entladekapazität. Bei Zyklus 200 ist wird noch eine Kapazität von 97% erhalten.

### Experiment 4: Test-Vollzellen mit Lithiumeisenkobaltphosphat LiFeCoPO₄ als aktives Elektrodenmaterial

Um weitere Lithiummetallphosphate als aktives Elektrodenmaterial zu testen, wurde in einem weiteren Experiment eine Test-Vollzelle gemäß Beispiel 3 hergestellt. Das aktive Material der positiven Elektroden (Kathoden) bestand aus Lithiumeisenkobaltphosphat (LiFeCoPO₄). Die Test-Vollzelle wurde mit dem in Beispiel 2 beschriebenen Elektrolyten 1 befüllt.

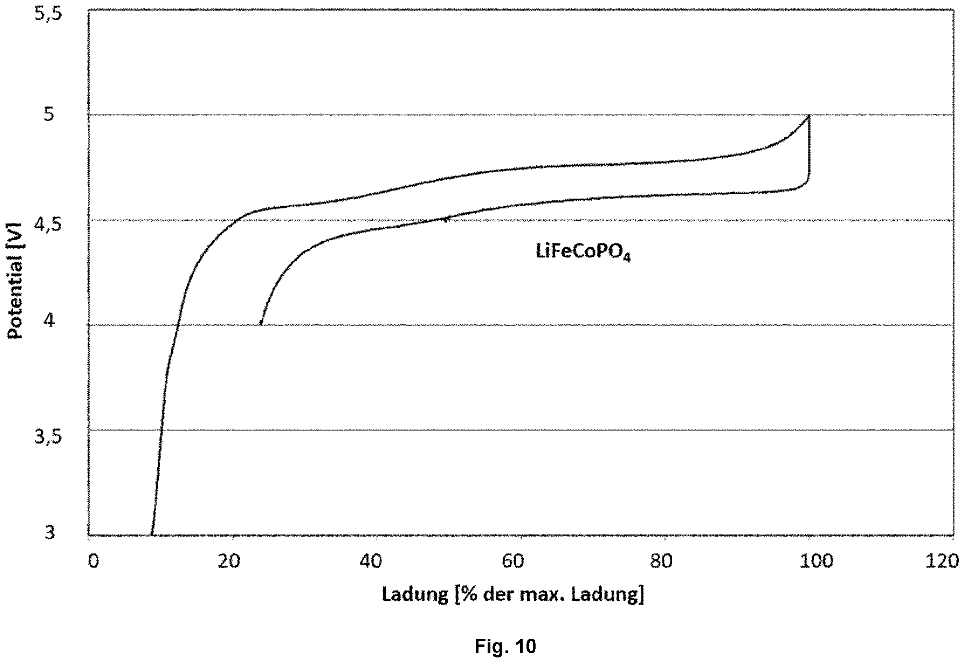

Figur 10 zeigt den Potentialverlauf des ersten Zyklus in Volt [V] über der prozentualen Ladung, die auf die maximale Ladung der Test-Vollzelle bezogen ist [% der max. Ladung]. Im ersten Zyklus der Test-Vollzelle findet auf der negativen Elektrode eine Deckschichtbildung statt. Für diese Deckschichtbildung werden Lithium-Ionen irreversibel verbraucht, sodass die Entladekapazität der Test-Vollzelle geringer als die Ladekapazität ist. Die Test-Vollzelle wurde mit einer Laderate von C/10 bis zu einem oberen Potential von 5,0 V geladen. Danach erfolgte die Entladung mit einer Entladerate von ebenfalls C/10 bis zu einem Entladepotential von 4,0 Volt.

Die Test-Vollzelle kann bis zu einem hohen oberen Potential von 5 Volt geladen und danach wieder entladen werden. Es ist keine Elektrolytzersetzung auch bei hohen Potentialen erkennbar.

### Experiment 5: Test-Vollzellen mit Lithiumeisenphosphat LiFePO₄ (LEP) als aktives Elektrodenmaterial in Kombination mit Elektrolyt 1und Elektrolyt 3 und dem Referenzelektrolyten

Zur Untersuchung der Elektrolyte 1 und 3 in Kombination mit Lithiumeisenphosphat als aktives Material wurden verschiedene Experimente durchgeführt. Zum einen wurden die Deckschichtkapazitäten der Elektrolyte 1 und 3 ermittelt. Diese Deckschicht wird beim ersten Laden der Test-Vollzelle auf der negativen Elektrode gebildet. Für diese Deckschichtbildung werden Lithiumionen irreversibel verbraucht, sodass der Test-Vollzelle weniger zykelbare Kapazität für die Folgezyklen zur Verfügung steht. Zum anderen wurden die Entladekapazitäten in den Elektrolyten 1 und 3 bestimmt. Zum Vergleich wurden beide Experimente auch im Referenzelektrolyten durchgeführt.

Der Referenz-Elektrolyt, der Elektrolyt 1 und der Elektrolyt 3 wurden für dieses Experiment jeweils in einer Test-Vollzelle untersucht. Der Aufbau entsprach dem in Beispiel 3 beschriebenen Aufbau. Der in einem ersten Experiment verwendete Referenzelektrolyt hatte die Zusammensetzung LiAlCl₄ * x SO₂ mit x > 1,5. In einem zweiten und dritten Experiment wurden die Elektrolyten 1 und 3 untersucht.

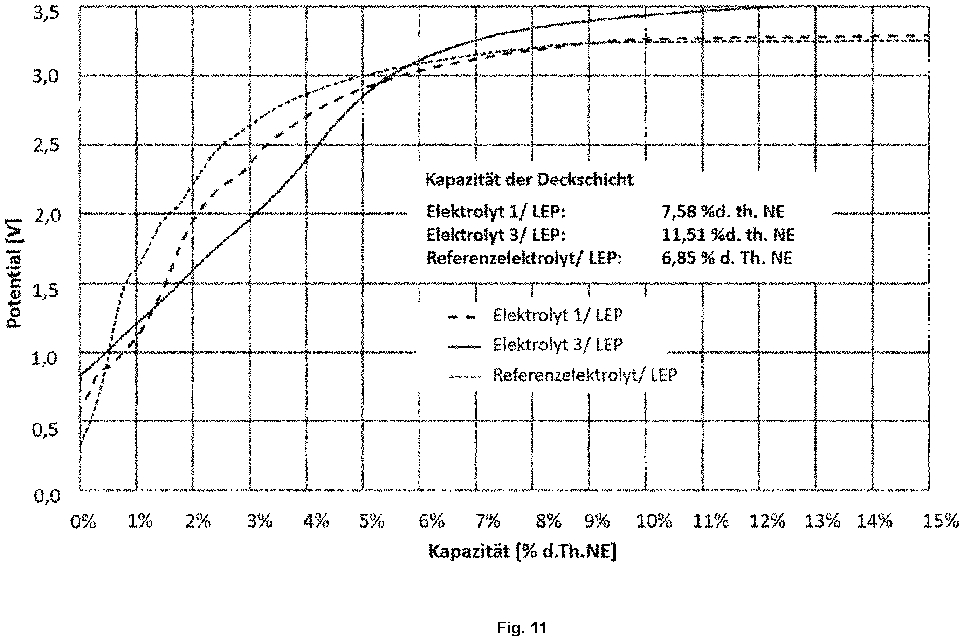

Figur 11 zeigt das Potential in Volt der Test-Vollzellen beim Laden der negativen Elektrode als Funktion der Kapazität, die bezogen ist auf die theoretische Kapazität der negativen Elektrode. Hierbei zeigt die gepunktete Linie die Ergebnisse für den Referenzelektrolyten und die gestrichelte bzw. durchgezogene Linie die Ergebnisse für die erfindungsgenäßen Elektrolyten 1 und 3. Die drei dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh (Q_{lad}) erreicht war. Danach erfolgte die Entladung der Test-Vollzellen mit 15 mA bis zum Erreichen eines Potentials von 2,5 Volt. Dabei erfolgte die Ermittlung der Entladekapazität (Qₑₙₜ).

Die Kapazität in % der Theorie, die zur Bildung der Deckschicht auf der negativen Elektrode verbraucht wurde, berechnet sich gemäß nachfolgend genannter Formel:

Deckschichtkapazität = (Q_{lad} (125mAh) - Qₑₙₜ (x mAh)) / Q_{NEL}

Bei Q_{NEL} handelt es sich um die theoretische Kapazität der verwendeten negativen Elektrode. Die theoretische Kapazität berechnet sich im Fall von Graphit auf einen Wert von 372 mAh/g. Die absoluten Kapazitätsverluste liegen bei 7,58 % bzw. 11,51 % für die Elektrolyte 1 und 3 und bei 6,85 % für den Referenzelektrolyten. Die Kapazität für die Deckschichtbildung ist bei beiden erfindungsgemäßen Elektrolyten etwas höher als beim Referenzelektrolyten. Werte im Bereich von 7,5 % - 11,5 % für die absoluten Kapazitätsverluste sind gute Ergebnisse in Kombination mit der Möglichkeit positive Elektroden bis 5 Volt einzusetzen.

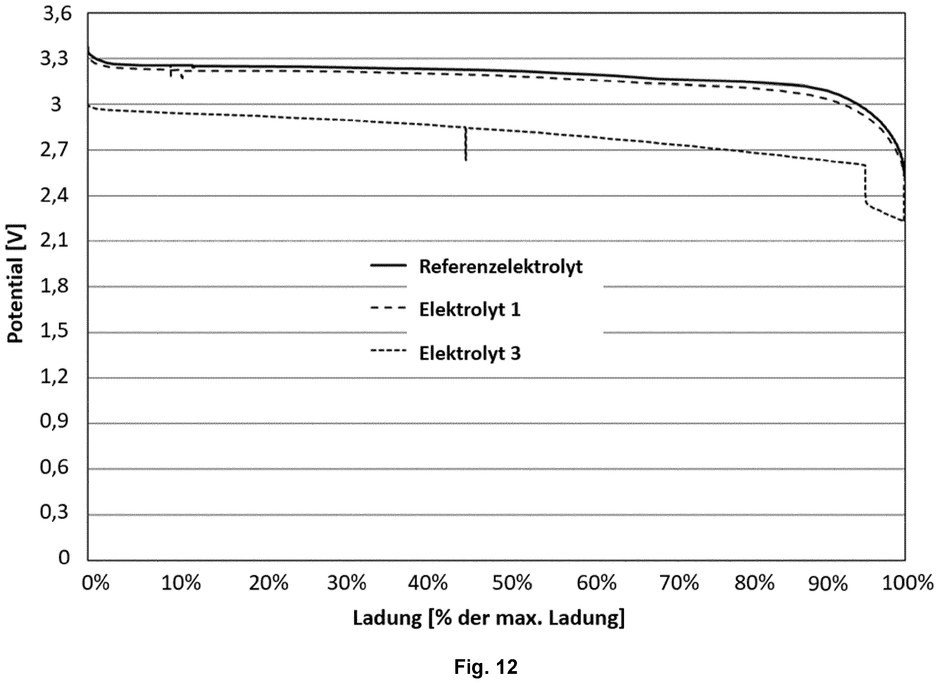

Für die Entladeexperimente wurden drei Test-Vollzellen gemäß Beispiel 3 mit den in Beispiel 2 beschriebenen Elektrolyten 1 und 3 und dem Referenzelektrolyten befüllt. Die Test-Vollzellen hatten Lithiumeisenphosphat als aktives Material der positiven Elektrode. Zur Ermittlung der Entladekapazitäten (siehe Beispiel 4) wurden die Test-Vollzellen mit Stromstärke von 15 mA bis zu einer Kapazität von 125 mAh geladen. Danach erfolgte die Entladung mit einer Stromstärke von 15 mA bis zu einem Entladepotential von 2,5 Volt. Figur 12 zeigt den Potentialverlauf während der Entladung über der entladenen Ladungsmenge in % [% der maximalen Ladung]. Alle Test-Vollzellen zeigen eine flache Entladekurve, die für einen guten Betrieb einer Batteriezelle notwendig ist.

### Experiment 6: Bestimmung von Leitfähigkeiten der Elektrolyte 1, 3 und 4

Zur Bestimmung der Leitfähigkeit wurde der Elektrolyte 1, 3 und 4 mit verschiedenen Konzentrationen der Verbindungen 1, 3 und 4 hergestellt. Für jede Konzentration der verschiedenen Verbindungen wurden die Leitfähigkeiten der Elektrolyten bestimmt, indem ein konduktives Messverfahren verwendet wurde. Dabei wurde nach Temperierung ein Zweielektrodensensor berührend in die Lösung gehalten und in einem Messbereich von 0 - 50 mS/cm gemessen. Bei den Messungen wurde beachtet, dass der Sensor mit der SO₂-haltigen Elektrolytlösung reagieren kann.

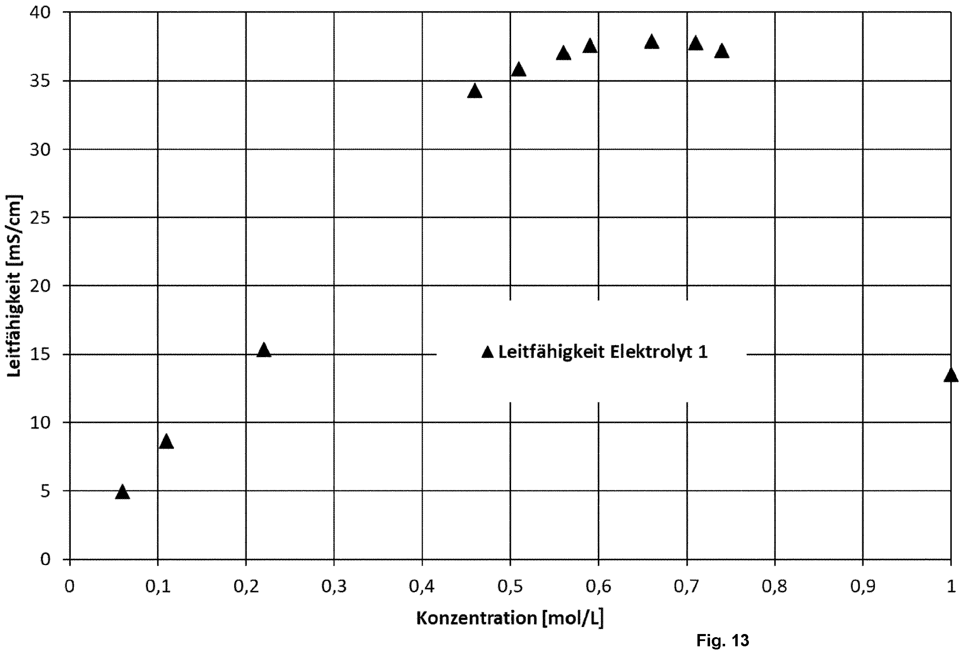

Figur 13 zeigt die Leitfähigkeit des Elektrolyten 1 in Abhängigkeit der Konzentration der Verbindung 1. Zu sehen ist ein Maximum der Leitfähigkeit bei einer Konzentration der Verbindung 1 von 0,6 mol/L - 0,7 mol/L mit einem Wert von ca. 37,9 mS/cm. Im Vergleich dazu haben die aus dem Stand der Technik bekannten, organischen Elektrolyten, wie z.B. LP30 (1 M LiPF6 / EC-DMC (1:1 Gew.)) eine Leitfähigkeit von nur ca. 10 mS/cm.

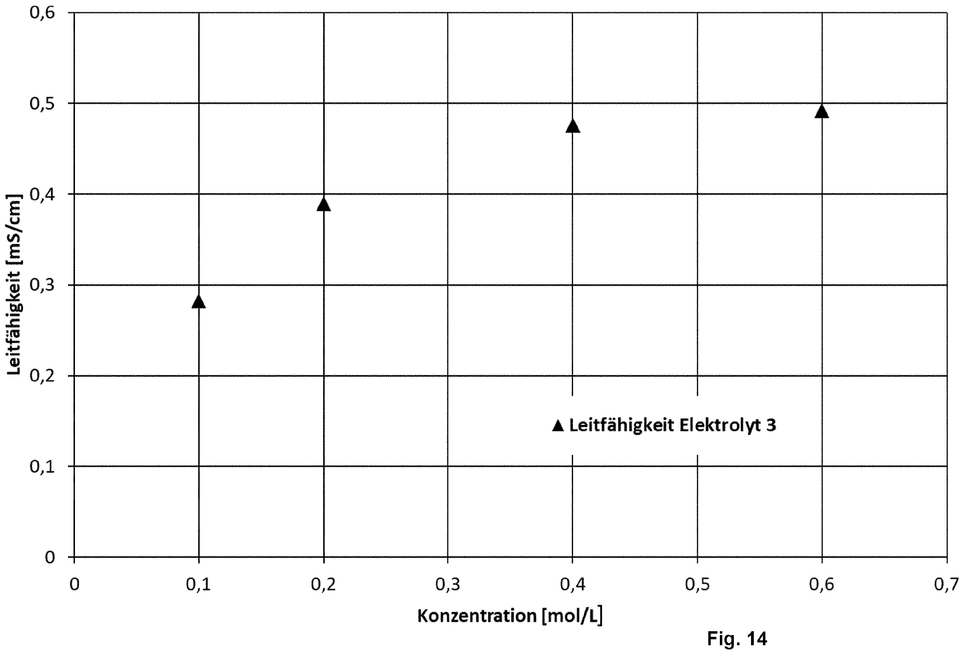

Die Figuren 14 (Elektrolyt 3) und 15 (Elektrolyt 4) zeigen die zu der verschiedenen Konzentration ermittelten Leitfähigkeitswerte für die Elektrolyte 3 und 4.

Bei Elektrolyt 4 werden maximal 18 mS/cm bei einer Leitsalzkonzentration von 1 mol/L erreicht. Elektrolyt 3 zeigt seine höchste Leitfähigkeit von 0,5 mS/cm bei einer Leitsalzkonzentration von 0,6 mol/L. Obwohl Elektrolyt 3 eine geringere Leitfähigkeit zeigt, ist, wie in Experiment 4, eine Ladung bzw. Entladung einer Test-Vollzelle gut möglich.

### Experiment 7: Tieftemperaturverhalten

Um das Tieftemperaturverhalten des Elektrolyten 1 im Vergleich zum Referenzelektrolyten zu bestimmen, wurden zwei Test-Vollzellen, gemäß Beispiel 3 hergestellt. Eine Test-Vollzelle wurde mit Referenzelektrolyt der Zusammensetzung LiAlCl₄*6SO₂ und die andere Test-Vollzelle mit Elektrolyt 1 befüllt. Die Test-Vollzelle mit dem Referenzelektrolyt enthielt Lithiumeisenphosphat (LEP) als aktives Material, die Testzelle mit Elektrolyt 1 enthielt Lithiumnickelmangancobaltoxid (NMC) als aktives Material der positiven Elektrode. Die Test-Vollzellen wurden bei 20°C bis 3,6 Volt (LEP) bzw. 4,4 Volt (NMC) geladen und bei der jeweiligen zu untersuchenden Temperatur bis 2,5 Volt wieder entladen. Die bei 20°C erreichte Entladekapazität wurde mit 100% bewertet. Die Temperatur zur Entladung wurde in Temperaturschritten von 10°K erniedrigt. Die erhaltene Entladekapazität wurde in % der Entladekapazität bei 20°C beschrieben. Da die Tieftemperaturentladungen nahezu unabhängig von den verwendeten aktiven Materialien der positiven und negativen Elektrode sind, können die Ergebnisse auf alle Kombinationen von aktiven Materialien übertragen werden. Tabelle 3 zeigt die Ergebnisse.

**Tabelle 3: Entladekapazitäten in Abhängigkeit der Temperatur**

| Temperatur | Entladekapazität des Elektrolyts 1 | Entladekapazität des Referenzelektrolyt |
|---|---|---|
| 20°C | 100% | 100% |
| 10°C | 99% | 99% |
| 0°C | 95% | 46% |
| -10°C | 89% | 21% |
| -20°C | 82% | n/a |
| -30°C | 73% | n/a |
| -35°C | 68% | n/a |
| -40°C | 61% | n/a |

Die Test-Vollzelle mit dem Elektrolyt 1 zeigt ein sehr gutes Tieftemperaturverhalten. Bei - 20°C werden noch 82% der Kapazität erreicht, bei - 30°C noch 73%. Selbst bei einer Temperatur von -40 °C können noch 61% der Kapazität entladen werden. Im Gegensatz dazu zeigt die Test-Vollzelle mit dem Referenzelektrolyten nur eine Entladefähigkeit bis - 10°C. Dabei wird eine Kapazität von 21% erreicht. Bei tieferen Temperaturen kann die Test-Vollzelle mit dem Referenzelektrolyten nicht mehr entladen werden.

## Patentansprüche

1. Wiederaufladbare Batteriezelle (2, 20, 40), enthaltend ein aktives Metall, zumindest eine positive Elektrode (4, 23, 44), zumindest eine negative Elektrode (5, 22, 45), ein Gehäuse (1, 28) und einen Elektrolyten,
wobei die positive Elektrode (4, 23, 44) mindestens eine polyanionische Verbindung als aktives Material aufweist und
wobei der Elektrolyt auf SO₂ basiert und zumindest ein erstes Leitsalz enthält, welches die Formel (I) 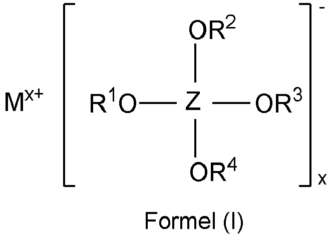 aufweist, wobei
- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten R¹, R², R³ und R⁴ unabhängig voneinander ausgewählt sind aus der Gruppe, die gebildet wird von C₁-C₁₀ Alkyl, C₂-C₁₀ Alkenyl, C₂-C₁₀ Alkinyl, C₃-C₁₀ Cycloalkyl, C₆-C₁₄ Aryl und C₅-C₁₄ Heteroaryl; und
- wobei Z Aluminium oder Bor ist.

2. Wiederaufladbare Batteriezelle (2, 20, 40) nach Anspruch 1,
bei welcher die polyanionische Verbindung die Zusammensetzung AₓM_{y}(Xᵣ₁Oₛ₁)ₐF_{b} aufweist, worin
- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium,
- M mindestens ein Metall ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente,
- (Xᵣ₁Oₛ₁)ⁿ⁻ mindestens eine erste Polyanion-Struktureinheit ist, in welcher X mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- F das Element Fluor (F) ist,
- n eine Zahl größer 0 ist,
- x und y unabhängig voneinander Zahlen größer 0 sind,
- r1 und s1 unabhängig voneinander Zahlen größer 0 sind,
- a eine Zahl größer 0 ist und
- b eine Zahl größer oder gleich 0 ist.

3. Wiederaufladbare Batteriezelle (2, 20, 40) nach Anspruch 2,
bei welcher das Metall A ausgewählt ist aus der Gruppe, die gebildet wird von den Elementen Lithium, Natrium, Calcium oder Zink, bevorzugt ist das Metall A Lithium oder Natrium.

4. Wiederaufladbare Batteriezelle (2, 20, 40) nach Anspruch 2,
bei welcher das Metall M ausgewählt ist aus der Gruppe, die gebildet wird von den Elementen Titan, Vanadium, Chrom, Mangan, Eisen, Cobalt, Nickel, Kupfer und Zink.

5. Wiederaufladbare Batteriezelle (2, 20, 40) nach den Ansprüchen 2 bis 4,
bei welcher die erste Polyanion-Struktureinheit die Zusammensetzung (XO₄)ⁿ⁻, (XₘO₃ₘ₋₁)ⁿ⁻ oder (XO₃)ⁿ⁻ aufweist, worin m und n unabhängig voneinander Zahlen größer 0 sind,
wobei die erste Polyanion-Struktureinheit bevorzugt die Zusammensetzung (SO₄)²⁻, (PO₄)³⁻, (SiO₄)²⁻, (AsO₄)³⁻, (MoO₄)²⁻, (WO₄)²⁻, (P₂O₇)⁴⁻, (CO₃)²⁻ oder (BO₃)³ aufweist.

6. Wiederaufladbare Batteriezelle (2, 20, 40) nach Anspruch 5,
bei welcher die polyanionische Verbindung die Zusammensetzung AₓM_{y}(PO₄)ₐF_{b} aufweist,
wobei die polyanionische Verbindung bevorzugt die Zusammensetzung LiFePO₄, NaFePO₄, LiMnPO₄, LiCoPO₄, LiNiPO₄, LiVPO₄F, Li(Mn_{0.7}Fe_{0.3})PO₄ oder Li(Mn_{0.6}Fe_{0.4})PO₄ aufweist.

7. Wiederaufladbare Batteriezelle (2, 20, 40) nach Anspruch 5,
bei welcher die polyanionische Verbindung die Zusammensetzung AₓM_{y}(SiO₄)ₐF_{b} aufweist,
wobei die polyanionische Verbindung bevorzugt die Zusammensetzung Li₂FeSiO₄, Li₂MnSiO₄, Li₂CoSiO₄, Li₂Mn_{0.2}Fe_{0.8}SiO₄ oder Li₂Mn_{0.5}Fe_{0.5}SiO₄ aufweist.

8. Wiederaufladbare Batteriezelle (2, 20, 40) nach Anspruch 5,
bei welcher die polyanionische Verbindung die Zusammensetzung AₓM_{y}(SO₄)ₐF_{b} aufweist,
wobei die polyanionische Verbindung bevorzugt die Zusammensetzung LiFeSO₄F, LiCoSO₄F, LiNiSO₄F oder LiMnSO₄F aufweist.

9. Wiederaufladbare Batteriezelle (2, 20, 40) nach einem der Ansprüche 1 bis 8, bei welcher die polyanionische Verbindung mindestens zwei voneinander abweichende Polyanion-Struktureinheiten (Xᵣ₁Oₛ₁)ⁿ⁻ und (Gᵣ₂Oₛ₂)^{k-} aufweist, worin n, k, r1, r2, s1 und s2 unabhängig voneinander Zahlen größer 0 sind,
wobei die polyanionische Verbindung bevorzugt die Zusammensetzung AₓM_{y}(Xᵣ₁Oₛ₁)a(Gᵣ₂Oₛ₂)F_{b} aufweist, worin
- (Xᵣ₁Oₛ₁)ⁿ⁻ mindestens die erste Polyanion-Struktureinheit ist, in welcher X mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- (Gᵣ₂Oₛ₂)^{k-} mindestens eine zweite Polyanion-Struktureinheit ist, in welcher G mindestens ein Element ist, das ausgewählt ist aus der Gruppe, die gebildet wird von den Elementen Phosphor (P), Silizium (Si), Schwefel (S), Bor (B), Kohlenstoff (C), Arsen (As), Molybdän (Mo), Wolfram (W) und Vanadium (V), und O das Element Sauerstoff (O) ist,
- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium,
- M mindestens ein Metall ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente,
- F das Element Fluor (F) ist,
- x und y unabhängig voneinander Zahlen größer 0 sind,
- a eine Zahl größer 0 ist und
- b eine Zahl größer oder gleich 0 ist,
und wobei die polyanionische Verbindung weiter bevorzugt die Zusammensetzung AₓM_{y}(XO₄)ₐ(XO₃)F_{b} und besonders bevorzugt die Zusammensetzung Li₃Fe_{0.2}Mn_{0.8}CO₃PO₄ oder Na₃Fe_{0.2}Mn_{0.8}CO₃PO₄ aufweist.

10. Wiederaufladbare Batteriezelle (2, 20, 40) nach einem der vorhergehenden Ansprüche,
bei welchem die Substituenten R¹, R², R³ und R⁴ des ersten Leitsalzes unabhängig voneinander ausgewählt sind aus der Gruppe, die gebildet wird von
- C₁-C₆ Alkyl; bevorzugt von C₂-C₄ Alkyl; besonders bevorzugt von den Alkylgruppen 2-Propyl, Methyl und Ethyl;
- C₂-C₆ Alkenyl; bevorzugt von C₂-C₄ Alkenyl; besonders bevorzugt von den Alkenylgruppen Ethenyl und Propenyl;
- C₂-C₆-Alkinyl; bevorzugt von C₂-C₄-Alkinyl;
- C₃-C₆ Cycloalkyl;
- Phenyl; und
- C₅-C₇ Heteroaryl.

11. Wiederaufladbare Batteriezelle (2, 20, 40) nach einem der vorhergehenden Ansprüche,
bei welchem zumindest einer der Substituenten R¹, R², R³ und R⁴ des ersten Leitsalzes durch mindestens ein Fluoratom und/oder durch mindestens eine chemische Gruppe substituiert ist, wobei die chemische Gruppe ausgewählt ist aus der Gruppe, die gebildet wird von C₁-C₄-Alkyl, C₂-C₄-Alkenyl, C₂-C₄-Alkinyl, Phenyl und Benzyl.

12. Wiederaufladbare Batteriezelle (2, 20, 40) nach einem der vorhergehenden Ansprüche,
bei welchem zumindest einer der Substituenten R¹, R², R³ und R⁴ des ersten Leitsalzes eine CF₃-Gruppe oder eine OSO₂CF₃-Gruppe ist.

13. Wiederaufladbare Batteriezelle (2, 20, 40) nach einem der vorhergehenden Ansprüche,
bei welchem das erste Leitsalz ausgewählt ist aus der Gruppe, die gebildet wird von

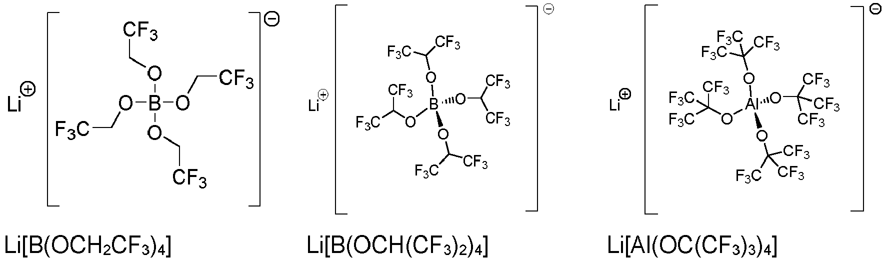

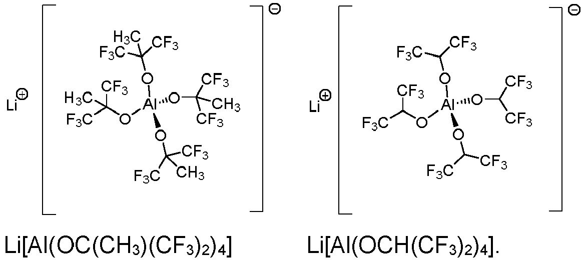

14. Wiederaufladbare Batteriezelle (2) nach einem der vorhergehenden Ansprüche, wobei der Elektrolyt mindestens ein zweites, von dem ersten Leitsalz nach Formel (I) abweichendes Leitsalz enthält.

15. Wiederaufladbare Batteriezelle (2, 20, 40) nach Anspruch 14,
bei welcher das zweite Leitsalz des Elektrolyten eine Alkalimetallverbindung, insbesondere eine Lithiumverbindung ist, die ausgewählt ist aus der Gruppe, die gebildet wird von einem Aluminat, einem Halogenid, einem Oxalat, einem Borat, einem Phosphat, einem Arsenat und einem Gallat.

16. Wiederaufladbare Batteriezelle (2, 20, 40) nach Anspruch 14 oder 15,
bei welcher das zweite Leitsalz des Elektrolyten ein Lithiumtetrahalogenoaluminat, insbesondere Lithiumtetrachloroaluminat ist.

17. Wiederaufladbare Batteriezelle (2, 20, 40) nach einem der vorhergehenden Ansprüche,
bei welcher der Elektrolyt mindestens ein Additiv enthält.

18. Wiederaufladbare Batteriezelle (2, 20, 40) nach Anspruch 17,
bei welcher das Additiv des Elektrolyten ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

19. Wiederaufladbare Batteriezelle (2, 20, 40) nach einem der vorhergehenden Ansprüche,
bei welcher der Elektrolyt die Zusammensetzung
(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,
bezogen auf das Gesamtgewicht der Elektrolytzusammensetzung aufweist.

20. Wiederaufladbare Batteriezelle (2, 20, 40) nach einem der vorhergehenden Ansprüche,
bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

21. Wiederaufladbare Batteriezelle (2, 20, 40) nach einem der vorhergehenden Ansprüche,
bei welcher der Elektrolyt mindestens 0,1 Mol SO₂, bevorzugt mindestens 1 Mol SO₂, weiter bevorzugt mindestens 5 Mol SO₂, weiter bevorzugt mindestens 10 Mol SO₂ und besonders bevorzugt mindestens 20 Mol SO₂ je Mol Leitsalz enthält.

22. Wiederaufladbare Batteriezelle (2, 20, 40) nach einem der vorhergehenden Ansprüche,
bei welcher das aktive Metall
- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium
ist.

23. Wiederaufladbare Batteriezelle (2, 20, 40) nach einem der vorhergehenden Ansprüche,
bei welcher die negative Elektrode (5, 22, 45) eine Insertionselektrode ist, die vorzugsweise Kohlenstoff als aktives Material, insbesondere in der Modifikation Graphit enthält.

24. Wiederaufladbare Batteriezelle (2, 20, 40) nach einem der vorhergehenden Ansprüche,
bei welcher die positive Elektrode (4, 23, 44) und/oder die negative Elektrode (5, 22, 45) ein Ableitelement (34, 35) aufweisen, das vorzugsweise
- entweder planar in Form eines Metallblechs oder einer Metallfolie oder
- dreidimensional in Form einer porösen Metallstruktur, insbesondere in Form eines Metallschaums (18)
ausgebildet ist.

25. Wiederaufladbare Batteriezelle (2, 20, 40) nach einem der vorhergehenden Ansprüche,
bei welcher die positive Elektrode (4, 23, 44) und/oder die negative Elektrode (5, 22, 45) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder
ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vorliegt.

26. Wiederaufladbare Batteriezelle (2, 20, 40) nach einem der vorhergehenden Ansprüche,
welche mehrere negativen Elektroden (5, 22, 45) und zumindest eine, vorzugsweise mehrere positive Elektroden (4, 23, 44) umfasst, die alternierend gestapelt in dem Gehäuse (1, 28) angeordnet sind, wobei die positiven Elektroden und die negativen Elektroden (5, 22, 45) vorzugsweise jeweils durch Separatoren (11, 21, 13) voneinander elektrisch getrennt sind.

## Claims

1. A rechargeable battery cell (2, 20, 40) comprising an active metal, at least one positive electrode (4, 23, 44), at least one negative electrode (5, 22, 45), a housing (1, 28) and an electrolyte,
the positive electrode (4, 23, 44) having at least one polyanionic compound as an active material and
the electrolyte being based on SO₂ and comprising at least one first conducting salt which has the formula (I) 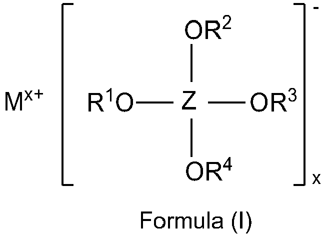
- M being a metal selected from the group formed by alkali metals, alkaline earth metals, metals of group 12 of the periodic table of the elements, and aluminum;
- x being an integer from 1 to 3;
- the substituents R¹, R², R³ and R⁴ being selected independently of one another from the group formed by C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl; and
- Z being aluminum or boron.

2. The rechargeable battery cell (2, 20, 40) according to claim 1,
in which the polyanionic compound has the composition AₓM_{y}(Xᵣ₁Oₛ₁)ₐF_{b}, wherein
- A is at least one metal selected from the group formed by the alkali metals, the alkaline earth metals, the metals of group 12 of the periodic table or aluminum,
- M is at least one metal selected from the group formed by the elements of groups 2, 3, 4, 5, 6, 7, 8, 9, 10, 11, 12, 13, 14, 15 and 16 of the periodic table of the elements,
- (Xᵣ₁Oₛ₁)ⁿ⁻ is at least one first polyanion structural unit in which X is at least one element selected from the group formed by the elements phosphorus (P), silicon (Si), sulfur (S), boron (B), carbon (C), arsenic (As), molybdenum (Mo), tungsten (W) and vanadium (V), and O is the element oxygen (O),
- F is the element fluorine (F),
- n is a number greater than 0,
- x and y independently of one another are numbers greater than 0;
- r1 and s1 independently of one another are numbers greater than 0,
- a is a number greater than 0 and
- b is a number greater than or equal to 0.

3. The rechargeable battery cell (2, 20, 40) according to claim 2,
in which the metal A is selected from the group formed by the elements lithium, sodium, calcium or zinc, the metal A preferably being lithium or sodium.

4. The rechargeable battery cell (2, 20, 40) according to claim 2,
in which the metal M is selected from the group formed by the elements titanium, vanadium, chromium, manganese, iron, cobalt, nickel, copper and zinc.

5. The rechargeable battery cell (2, 20, 40) according to claims 2 to 4,
in which the first polyanion structural unit has the composition (XO₄)ⁿ⁻, (XₘO₃ₘ₋₁)ⁿ⁻ or (XO₃)ⁿ⁻, wherein m and n are, independently of one another, numbers greater than 0, wherein the first polyanion structural unit preferably has the composition (SO₄)²⁻, (PO₄)³⁻, (SiO₄)²⁻, (ASO₄)³⁻, (MoO₄)²⁻, (WO₄)²⁻, (P₂O₇)⁴⁻, (CO₃)²⁻ or (BO₃)³ .

6. The rechargeable battery cell (2, 20, 40) according to claim 5,
in which the polyanionic compound has the composition AₓM_{y}(PO₄)ₐF_{b},
wherein the polyanionic compound preferably has the composition LiFePO₄, NaFePO₄, LiMnPO₄, LiCoPO₄, LiNiPO₄, LiVPO₄F, Li(Mn_{0.7}Fe_{0.3})PO₄ oder Li(Mn_{0.6}Fe_{0.4})PO₄.

7. The rechargeable battery cell (2, 20, 40) according to claim 5,
in which the polyanionic compound has the composition AₓM_{y}(SiO₄)ₐF_{b},
wherein the polyanionic compound preferably has the composition Li₂FeSiO₄, Li₂MnSiO₄, Li₂CoSiO₄, Li₂Mn_{0.2}Fe_{0.8}SiO₄ oder Li₂Mn_{0.5}Fe_{0.5}SiO₄.

8. The rechargeable battery cell (2, 20, 40) according to claim 5,
in which the polyanionic compound has the composition AₓM_{y}(SO₄)ₐF_{b},
wherein the polyanionic compound preferably has the composition LiFeSO₄F, LiCoSO₄F, LiNiSO₄F or LiMnSO₄F.

9. The rechargeable battery cell (2, 20, 40) according to any of claims 1 to 8,
in which the polyanionic compound has at least two different polyanion structural units (Xᵣ₁Oₛ₁)ⁿ⁻ and (Gᵣ₂Oₛ₂)^{k-}, wherein n, k, r1, r2, s1 and s2 are, independently of one another, numbers greater than 0,
wherein the polyanionic compound preferably has the composition AₓM_{y}(Xᵣ₁Oₛ₁)ₐ(Gᵣ₂Oₛ₂)F_{b}, wherein
- (Xᵣ₁Oₛ₁)ⁿ⁻ is at least one first polyanion structural unit in which X is at least one element selected from the group formed by the elements phosphorus (P), silicon (Si), sulfur (S), boron (B), carbon (C), arsenic (As), molybdenum (Mo), tungsten (W) and vanadium (V), and O is the element oxygen (O),
- (Gᵣ₂Oₛ₂)^{k-} is at least one second polyanion structural unit in which G is at least one element selected from the group formed by the elements phosphorus (P), silicon (Si), sulfur (S), boron (B), carbon (C), arsenic (As), molybdenum (Mo), tungsten (W) and vanadium (V), and O is the element oxygen (O),
- A is at least one metal selected from the group formed by the alkali metals, the alkaline earth metals, the metals of group 12 of the periodic table or aluminum,
- M is at least one metal selected from the group formed by the elements of groups 2, 3, 4, 5, 6, 7, 8, 9, 10, 11, 12, 13, 14, 15 and 16 of the periodic table of the elements,
- F is the element fluorine (F),
- x and y independently of one another are numbers greater than 0;
- a is a number greater than 0 and
- b is a number greater than or equal to 0,
and wherein the polyanionic compound more preferably has the composition AₓM_{y}(XO₄)ₐ(XO₃)F_{b} and particularly preferably the composition Li₃Fe_{0.2}Mn_{0.8}CO₃PO₄ or Na₃Fe_{0.2}Mn_{0.8}CO₃PO₄.

10. The rechargeable battery cell (2, 20, 40) according to any one of the preceding claims, in which the substituents R¹, R², R³ and R⁴ of the first conducting salt are selected independently of one another from the group formed by
- C₁-C₆ alkyl; preferably from C₂-C₄ alkyl; particularly preferably from the alkyl groups 2-propyl, methyl and ethyl;
- C₂-C₆ alkenyl; preferably from C₂-C₄ alkenyl; particularly preferably from the alkenyl groups ethenyl and propenyl;
- C₂-C₆ alkynyl; preferably from C₂-C₄ alkynyl;
- C₃-C₆ cycloalkyl;
- phenyl; and
- C₅-C₇ heteroaryl.

11. The rechargeable battery cell (2, 20, 40) according to any one of the preceding claims, in which at least one of the substituents R¹, R², R³ and R⁴ of the first conducting salt is substituted by at least one fluorine atom and/or by at least one chemical group, wherein the chemical group is selected from the group formed by C₁-C₄ alkyl, C₂-C₄ alkenyl, C₂-C₄ alkynyl, phenyl and benzyl.

12. The rechargeable battery cell (2, 20, 40) according to any one of the preceding claims, in which at least one of the substituents R¹, R², R³ and R⁴ of the first conducting salt is a CF₃ group or an OSO₂CF₃ group.

13. The rechargeable battery cell (2, 20, 40) according to any one of the preceding claims, in which the first conducting salt is selected from the group formed by

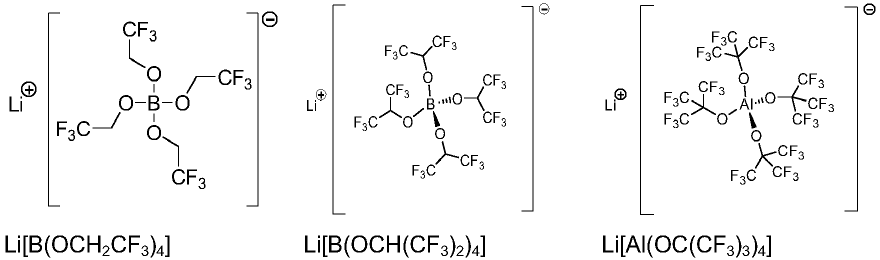

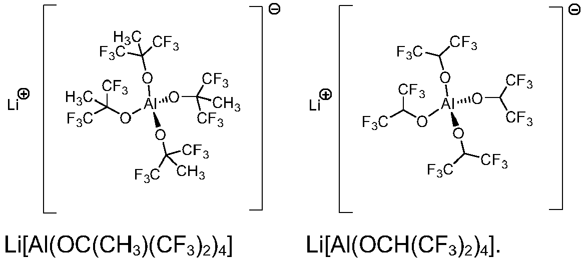

14. The rechargeable battery cell (2) according to any one of the preceding claims,
wherein the electrolyte comprises at least one second conducting salt different from the first conducting salt according to formula (I).

15. The rechargeable battery cell (2, 20, 40) according to claim 14,
in which the second conducting salt of the electrolyte is an alkali metal compound, in particular a lithium compound, which is selected from the group formed by an aluminate, a halide, an oxalate, a borate, a phosphate, an arsenate and a gallate.

16. The rechargeable battery cell (2, 20, 40) according to claim 14 or 15,
in which the second conducting salt of the electrolyte is a lithium tetrahaloaluminate, in particular lithium tetrachloroaluminate.

17. The rechargeable battery cell (2, 20, 40) according to any one of the preceding claims, in which the electrolyte comprises at least one additive.

18. The rechargeable battery cell (2, 20, 40) according to claim 17,
in which the additive of the electrolyte is selected from the group formed by vinylene carbonate and its derivatives, vinylethylene carbonate and its derivatives, methylethylene carbonate and its derivatives, lithium (bisoxalato)borate, lithium difluoro(oxalato)borate, lithium tetrafluoro(oxalato)phosphate, lithium oxalate, 2-vinylpyridine, 4-vinylpyridine, cyclic exomethylene carbonates, sultones, cyclic and acyclic sulfonates, acyclic sulfites, cyclic and acyclic sulfinates, organic esters, inorganic acids, acyclic and cyclic alkanes, which acyclic and cyclic alkanes have a boiling point of at least 36°C at 1 bar, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides, and halogenated organic heterocycles.

19. The rechargeable battery cell (2, 20, 40) according to any one of the preceding claims, in which the electrolyte has the composition
(i) 5 to 99.4% by weight sulfur dioxide,
(ii) 0.6 to 95% by weight of the first conducting salt,
(iii) 0 to 25% by weight of the second conducting salt and
(iv) 0 to 10% by weight of the additive,
based on the total weight of the electrolyte composition.

20. The rechargeable battery cell (2, 20, 40) according to any one of the preceding claims, in which the molar concentration of the first conducting salt is in the range from 0.01 mol/L to 10 mol/L, preferably from 0.05 mol/L to 10 mol/L, more preferably from 0.1 mol/L to 6 mol/L and most preferably from 0.2 mol/L to 3.5 mol/L based on the total volume of the electrolyte.

21. The rechargeable battery cell (2, 20, 40) according to any one of the preceding claims, in which the electrolyte comprises at least 0.1 mol SO₂, preferably at least 1 mol SO₂, more preferably at least 5 mol SO₂, more preferably at least 10 mol SO₂ and most preferably at least 20 mol SO₂ per mole of conducting salt.

22. The rechargeable battery cell (2, 20, 40) according to any one of the preceding claims, in which the active metal is
- an alkali metal, in particular lithium or sodium;
- an alkaline earth metal, in particular calcium;
- a metal from group 12 of the periodic table, in particular zinc; or
- aluminum.

23. The rechargeable battery cell (2, 20, 40) according to any one of the preceding claims, in which the negative electrode (5, 22, 45) is an insertion electrode which preferably comprises carbon as the active material, in particular as the allotrope graphite.

24. The rechargeable battery cell (2, 20, 40) according to any one of the preceding claims, in which the positive electrode (4, 23, 44) and/or the negative electrode (5, 22, 45) have a discharge element (34, 35), which is preferably formed
- either planar in the form of a metal sheet or a metal foil, or
- three-dimensional in the form of a porous metal structure, in particular in the form of a metal foam (18).

25. The rechargeable battery cell (2, 20, 40) according to any one of the preceding claims, in which the positive electrode (4, 23, 44) and/or the negative electrode (5, 22, 45) comprises at least one binder, preferably a fluorinated binder, in particular a polyvinylidene fluoride and/or a terpolymer made of tetrafluoroethylene, hexafluoropropylene and vinylidene fluoride, or
a binder consisting of a polymer which is built up from monomeric structural units of a conjugated carboxylic acid or from the alkali, alkaline earth or ammonium salt of said conjugated carboxylic acid or from a combination thereof, or
a binder consisting of a polymer based on monomeric styrene and butadiene structural units, or a binder from the group of carboxymethyl celluloses,
wherein the binder is preferably present in a concentration of at most 20% by weight, more preferably at most 15% by weight, more preferably at most 10% by weight, more preferably at most 7% by weight, more preferably at most 5% by weight and most preferably at most 2% by weight based on the total positive electrode weight.

26. The rechargeable battery cell (2, 20, 40) according to any one of the preceding claims, which comprises a plurality of negative electrodes (5, 22, 45) and at least one, preferably a plurality of positive electrodes (4, 23, 44) which are stacked alternately in the housing (1, 28), wherein the positive electrodes and the negative electrodes (5, 22, 45) are preferably each electrically separated from one another by separators (11, 21, 13).

## Revendications

1. Cellule de batterie rechargeable (2, 20, 40), contenant un métal actif, au moins une électrode positive (4, 23, 44), au moins une électrode négative (5, 22, 45), un boîtier (1, 28) et un électrolyte,
dans laquelle l'électrode positive (4, 23, 44) présente au moins un composé polyanionique comme matériau actif et
dans laquelle l'électrolyte est à base de SO₂ et contient au moins un premier sel conducteur qui présente la formule (I) 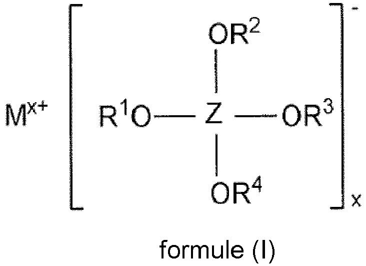 dans laquelle
- M est un métal choisi dans le groupe formé par les métaux alcalins, les métaux alcalino-terreux, les métaux du groupe 12 du tableau périodique des éléments et l'aluminium ;
- x est un nombre entier de 1 à 3 ;
- les substituants R¹, R², R³ et R⁴ sont choisis, indépendamment les uns des autres, dans le groupe formé par les groupes alkyle en C₁-C₁₀, alcényle en C₂-C₁₀, alcynyle en C₂-C₁₀, cycloalkyle en C₃-C₁₀, aryle en C₆-C14 et hétéroaryle en C₅-C₁₄ ; et
- dans laquelle Z est l'aluminium ou le bore.

2. Cellule de batterie rechargeable (2, 20, 40) selon la revendication 1, dans laquelle le composé polyanionique présente la composition AₓM_{y}(Xᵣ₁Oₛ₁)ₐF_{b}, dans laquelle
- A est au moins un métal choisi dans le groupe formé par les métaux alcalins, les métaux alcalino-terreux, les métaux du groupe 12 du tableau périodique ou l'aluminium,
- M est au moins un métal choisi dans le groupe formé par les éléments des groupes 2, 3, 4, 5, 6, 7, 8, 9, 10, 11, 12, 13, 14, 15 et 16 du tableau périodique des éléments,
- (Xᵣ₁Oₛ₁)ⁿ⁻ est au moins une première unité structurale polyanionique dans laquelle X est au moins un élément choisi dans le groupe formé par les éléments phosphore (P), silicium (Si), soufre (S), bore (B), carbone (C), arsenic (As), molybdène (Mo), tungstène (W) et vanadium (V), et O est l'élément oxygène (O),
- F est l'élément fluor (F),
- n est un nombre supérieur à 0,
- x et y sont, indépendamment l'un de l'autre, des nombres supérieurs à 0,
- r1 et s1 sont, indépendamment l'un de l'autre, des nombres supérieurs à 0,
- a est un nombre supérieur à 0 et
- b est un nombre supérieur ou égal à 0.

3. Cellule de batterie rechargeable (2, 20, 40) selon la revendication 2, dans laquelle le métal A est choisi dans le groupe formé par les éléments lithium, sodium, calcium ou zinc, de préférence le métal A est le lithium ou le sodium.

4. Cellule de batterie rechargeable (2, 20, 40) selon la revendication 2, dans laquelle le métal M est choisi dans le groupe formé par les éléments titane, vanadium, chrome, manganèse, fer, cobalt, nickel, cuivre et zinc.

5. Cellule de batterie rechargeable (2, 20, 40) selon les revendications 2 à 4,
dans laquelle la première unité structurale polyanionique présente la composition (XO₄)ⁿ⁻, (XₘO₃ₘ₊₁)ⁿ⁻ ou (XO₃)ⁿ⁻, dans laquelle m et n sont, indépendamment l'un de l'autre, des nombres supérieurs à 0,
dans laquelle la première unité structurale polyanionique présente de préférence la composition (SO₄)²⁻, (PO₄)³⁻, (SiO₄)²⁻, (AsO4)³⁻, (MoO4)²⁻, (WO₄)²⁻ , (P₂O₇)⁴⁻, (CO₃)²⁻ ou (BO₃)³⁻.

6. Cellule de batterie rechargeable (2, 20, 40) selon la revendication 5,
dans laquelle le composé polyanionique présente la composition AₓM_{y}(PO₄)ₐF_{b},
dans laquelle le composé polyanionique présente de préférence la composition LiFePO₄, NaFePO₄, LiMnPO₄, LiCoPO₄, LiNiPO₄, LiVPO₄F, Li(Mn_{0,7}Fe_{0,3})PO₄ ou Li(Mn_{0,6}Fe_{0,4})PO₄.

7. Cellule de batterie rechargeable (2, 20, 40) selon la revendication 5,
dans laquelle le composé polyanionique présente la composition AₓM_{y}(SiO₄)ₐF_{b},
dans laquelle le composé polyanionique présente de préférence la composition Li₂FeSiO₄, Li₂MnSiO₄, Li₂CoSiO₄, Li₂Mn_{0,2}Fe_{0,8}SiO₄ ou Li₂Mn_{0,5}Fe_{0,5}SiO₄.

8. Cellule de batterie rechargeable (2, 20, 40) selon la revendication 5,
dans laquelle le composé polyanionique présente la composition AₓM_{y}(SO₄)ₐF_{b}, dans laquelle le composé polyanionique présente de préférence la composition LiFeSO₄F, LiCoSO₄F, LiNiSO₄F ou LiMnSO₄F.

9. Cellule de batterie rechargeable (2, 20, 40) selon l'une des revendications 1 à 8,
dans laquelle le composé polyanionique présente au moins deux unités structurales polyanioniques différentes l'une de l'autre (Xᵣ₁Oₛ₁)ⁿ⁻ et (Gᵣ₂Oₛ₂)^{k-}, dans lesquelles n, k, r1, r2, s1 et s2 sont, indépendamment les uns des autres, des nombres supérieurs à 0,
dans laquelle le composé polyanionique présente de préférence la composition AₓM_{y}(Xᵣ₁Oₛ₁)ₐ(Gᵣ₂Oₛ₂)F_{b}, dans laquelle
- (Xᵣ₁Oₛ₁)ⁿ⁻ est au moins la première unité structurale polyanionique dans laquelle X est au moins un élément choisi dans le groupe formé par les éléments phosphore (P), silicium (Si), soufre (S), bore (B), carbone (C), arsenic (As), molybdène (Mo), tungstène (VV) et vanadium (V), et O est l'élément oxygène (O),
- (Gᵣ₂Oₛ₂)^{k-} est au moins une deuxième unité structurale polyanionique dans laquelle G est au moins un élément choisi dans le groupe formé par les éléments phosphore (P), silicium (Si), soufre (S), bore (B), carbone (C), arsenic (As), molybdène (Mo), tungstène (W) et vanadium (V), et O est l'élément oxygène (O),
- A est au moins un métal choisi dans le groupe formé par les métaux alcalins, les métaux alcalino-terreux, les métaux du groupe 12 du tableau périodique ou l'aluminium,
- M est au moins un métal choisi dans le groupe formé par les éléments des groupes 2, 3, 4, 5, 6, 7, 8, 9, 10, 11, 12, 13, 14, 15 et 16 du tableau périodique des éléments,
- F est l'élément fluor (F),
- x et y sont, indépendamment l'un de l'autre, des nombres supérieurs à 0,
- a est un nombre supérieur à 0 et
- b est un nombre supérieur ou égal à 0,
et dans laquelle le composé polyanionique a en outre de préférence la composition AₓM_{y}(XO₄)ₐ(XO₃)F_{b} et de manière particulièrement préférée la composition Li₃Fe_{0,2}Mn_{0,8}CO₃PO₄ ou Na₃Fe_{0,2}Mn_{0,8}CO₃PO₄.

10. Cellule de batterie rechargeable (2, 20, 40) selon l'une des revendications précédentes,
dans laquelle les substituants R¹, R², R³ et R⁴ du premier sel conducteur sont choisis, indépendamment les uns des autres, dans le groupe formé par les groupes :
- alkyle en C₁-C₆ ; de préférence alkyle en C₂-C₄ ; de manière particulièrement préférée les groupes alkyle 2-propyle, méthyle et éthyle ;
- alcényle en C₂-C₆ ; de préférence alcényle en C₂-C₄, de manière particulièrement préférée les groupes alcényle éthényle et propényle ;
- alcynyle en C₂-C₆ ; de préférence alcynyle en C₂-C₄ ;
- cycloalkyle en C₃-C₆ ;
- phényle ; et
- hétéroaryle en C₅-C₇.

11. Cellule de batterie rechargeable (2, 20, 40) selon l'une des revendications précédentes,
dans laquelle au moins l'un des substituants R¹, R², R³ et R⁴ du premier sel conducteur est substitué par au moins un atome de fluor et/ou par au moins un groupe chimique, ledit groupe chimique étant choisi dans le groupe formé par les groupes alkyle en C₁-C₄, alcényle en C₂-C₄, alcynyle en C₂-C₄, phényle et benzyle.

12. Cellule de batterie rechargeable (2, 20, 40) selon l'une des revendications précédentes,
dans laquelle au moins l'un des substituants R¹, R², R³ et R⁴ du premier sel conducteur est un groupe CF₃ ou un groupe OSO₂CF₃.

13. Cellule de batterie rechargeable (2, 20, 40) selon l'une des revendications précédentes,
dans laquelle le premier sel conducteur est choisi dans le groupe formé par :

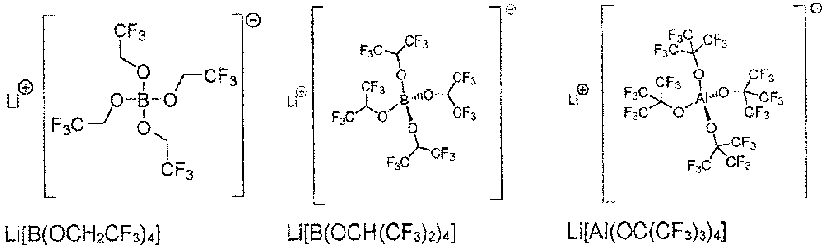

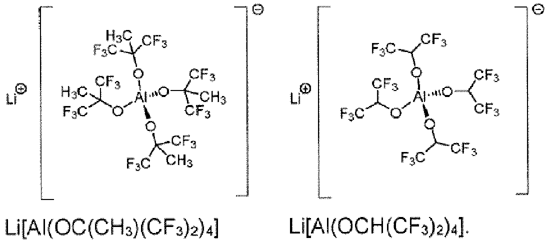

14. Cellule de batterie rechargeable (2) selon l'une des revendications précédentes,
dans laquelle l'électrolyte contient au moins un deuxième sel conducteur différent du premier sel conducteur selon la formule (I).

15. Cellule de batterie rechargeable (2, 20, 40) selon la revendication 14,
dans laquelle le deuxième sel conducteur de l'électrolyte est un composé de métal alcalin, en particulier un composé de lithium, choisi dans le groupe formé par un aluminate, un halogénure, un oxalate, un borate, un phosphate, un arséniate et un gallate.

16. Cellule de batterie rechargeable (2, 20, 40) selon la revendication 14 ou 15,
dans laquelle le deuxième sel conducteur de l'électrolyte est un tétrahalogénoaluminate de lithium, en particulier le tétrachloroaluminate de lithium.

17. Cellule de batterie rechargeable (2, 20, 40) selon l'une des revendications précédentes,
dans laquelle l'électrolyte contient au moins un additif.

18. Cellule de batterie rechargeable (2, 20, 40) selon la revendication 17,
dans laquelle l'additif de l'électrolyte est choisi dans le groupe formé par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, le tétrafluoro(oxalato)phosphate de lithium, l'oxalate de lithium, le 2-vinylpyridine, le 4-vinylpyridine, les carbonates d'exométhylène cycliques, les sultones, les sulfonates cycliques et acycliques, les sulfites acycliques, les sulfinates cycliques et acycliques, les esters organiques d'acides inorganiques, les alcanes acycliques et cycliques, lesquels alcanes acycliques et cycliques présentent un point d'ébullition à 1 bar d'au moins 36 °C, les composés aromatiques, les sulfonylimides cycliques et acycliques halogénés, les esters de phosphate cycliques et acycliques halogénés, les phosphines cycliques et acycliques halogénées, les phosphites cycliques et acycliques halogénés, les phosphazènes cycliques et acycliques halogénés, les silylamines cycliques et acycliques halogénées, les esters cycliques et acycliques halogénés, les amides cycliques et acycliques halogénés, les anhydrides cycliques et acycliques halogénés et les hétérocycles organiques halogénés.

19. Cellule de batterie rechargeable (2, 20, 40) selon l'une des revendications précédentes,
dans laquelle l'électrolyte présente la composition suivante :
(i) 5 à 99,4 % en poids de dioxyde de soufre,
(ii) 0,6 à 95 % en poids du premier sel conducteur,
(iii) 0 à 25 % en poids du deuxième sel conducteur et
(iv) 0 à 10 % en poids de l'additif,
par rapport au poids total de la composition de l'électrolyte.

20. Cellule de batterie rechargeable (2, 20, 40) selon l'une des revendications précédentes,
dans laquelle la concentration molaire du premier sel conducteur se situe dans la plage de 0,01 mol/l à 10 mol/l, de préférence de 0,05 mol/l à 10 mol/l, plus préférentiellement de 0,1 mol/l à 6 mol/l et de manière particulièrement préférée de 0,2 mol/l à 3,5 mol/l, par rapport au volume total de l'électrolyte.

21. Cellule de batterie rechargeable (2, 20, 40) selon l'une des revendications précédentes,
dans laquelle l'électrolyte contient au moins 0,1 mole de SO₂, de préférence au moins 1 mole de SO₂, plus préférentiellement au moins 5 moles de SO₂, encore plus préférentiellement au moins 10 moles de SO₂ et de manière particulièrement préférée au moins 20 moles de SO₂ par mole de sel conducteur.

22. Cellule de batterie rechargeable (2, 20, 40) selon l'une des revendications précédentes,
dans laquelle le métal actif est
- un métal alcalin, en particulier le lithium ou le sodium ;
- un métal alcalino-terreux, en particulier le calcium ;
- un métal du groupe 12 du tableau périodique, en particulier le zinc ; ou
- l'aluminium

23. Cellule de batterie rechargeable (2, 20, 40) selon l'une des revendications précédentes,
dans laquelle l'électrode négative (5, 22, 45) est une électrode d'insertion qui contient de préférence du carbone comme matériau actif, en particulier dans la modification graphite.

24. Cellule de batterie rechargeable (2, 20, 40) selon l'une des revendications précédentes,
dans laquelle l'électrode positive (4, 23, 44) et/ou l'électrode négative (5, 22, 45) présentent un élément de décharge (34, 35) qui est de préférence réalisé de manière
- plane sous la forme d'une tôle métallique ou d'une feuille métallique, ou
- tridimensionnelle sous la forme d'une structure métallique poreuse, en particulier sous la forme d'une mousse métallique (18).

25. Cellule de batterie rechargeable (2, 20, 40) selon l'une des revendications précédentes,
dans laquelle l'électrode positive (4, 23, 44) et/ou l'électrode négative (5, 22, 45) contient au moins un liant, de préférence un liant fluoré, en particulier un polyfluorure de vinylidène et/ou un terpolymère composé de tétrafluoroéthylène, d'hexafluoropropylène et de fluorure de vinylidène, ou
un liant constitué d'un polymère composé d'unités structurales monomères d'un acide carboxylique conjugué ou du sel de métal alcalin, de métal alcalino-terreux ou d'ammonium de cet acide carboxylique conjugué ou d'une combinaison de ceux-ci, ou
un liant constitué d'un polymère qui est basé sur des unités structurales monomères de styrène et de butadiène, ou qui contient un liant du groupe des carboxyméthylcelluloses,
le liant étant de préférence présent à une concentration d'au plus 20 % en poids, plus préférentiellement d'au plus 15 % en poids, plus préférentiellement d'au plus 10 % en poids, plus préférentiellement d'au plus 7 % en poids, plus préférentiellement d'au plus 5 % en poids et de manière particulièrement préférée d'au plus 2 % en poids par rapport au poids total de l'électrode positive.

26. Cellule de batterie rechargeable (2, 20, 40) selon l'une des revendications précédentes,
laquelle comprend plusieurs électrodes négatives (5, 22, 45) et au moins une, de préférence plusieurs électrodes positives (4, 23, 44) qui sont disposées alternativement empilées dans le boîtier (1, 28), les électrodes positives et les électrodes négatives (5, 22, 45) étant de préférence chaque fois séparées électriquement les unes des autres par des séparateurs (11, 21, 13).
